# EUROPEAN PATENT APPLICATION

(11) **EP 4 683 363 A1**
(43) Date of publication of application: **21.01.2026**
(21) Application number: 24777833.5
(22) Date of filing: 20.03.2024
(51) Int. Cl.: H04W 8/24

(54) **COMMUNICATION METHOD AND APPARATUS**

(30) Priority: 31.03.2023 CN 202310372650
(71) Applicant: Huawei Technologies Co., Ltd., Shenzhen, Guangdong 518129 (CN)
(72) Inventor: SHA, Tong, Shenzhen, Guangdong 518129 (CN); LI, Bingzhao, Shenzhen, Guangdong 518129 (CN); DAI, Xizeng, Shenzhen, Guangdong 518129 (CN); CHANG, Junren, Shenzhen, Guangdong 518129 (CN); KONG, Lingyu, Shenzhen, Guangdong 518129 (CN)
(74) Representative: Thun, Clemens
(86) International application number: PCT/CN2024/082752
(87) International publication number: WO 2024/199044

(57) **Abstract**

A communication method and apparatus are provided, which relate to the field of wireless communication technologies. The method includes: A network device sends first information to a terminal device, where the first information is used to query for capability information of the terminal device. The terminal device sends the capability information of the terminal device to the network device based on the first information, where the capability information indicates a first band combination supported by the terminal device, the first band combination includes M bands, the capability information includes second information, the second information indicates N downlink band groups in the first band combination, and each of the N downlink band groups includes at least one of the M bands. According to the method, the terminal device can report, to the network device, a downlink transmission capability that can be supported by the terminal device, thereby improving flexibility of performing transmission scheduling on the terminal device.

## Description

### CROSS-REFERENCE TO RELATED APPLICATIONS

This application claims priority to Chinese Patent Application No. 202310372650.8, filed with the China National Intellectual Property Administration on March 31, 2023 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

A terminal device may report capability information of the terminal device to a network device, so that the network device performs configuration and schedules transmission based on a capability of the terminal device. The capability information of the terminal device may include a carrier aggregation capability, a carrier bandwidth capability, a multiple-input multiple-output (multiple-input multiple-output, MIMO) capability, and the like that are supported by the terminal device. In a carrier aggregation scenario, the terminal device may receive downlink signals on a plurality of carriers, or may send uplink signals on a plurality of carriers. A current uplink carrier aggregation technology requires the terminal device to also support a high downlink carrier aggregation capability in a downlink direction. For example, an uplink transmission resource configured by the network device for the terminal device depends on a downlink transmission resource configured by the network device for the terminal device. For another example, the network device configures a same carrier bandwidth for uplink transmission and downlink transmission. As a result, the uplink transmission resource and the downlink transmission resource of the terminal device cannot be flexibly configured and scheduled based on a service requirement.

### SUMMARY

Embodiments of this application provide a communication method and apparatus, so that a terminal device reports, to a network device, a downlink transmission capability that can be supported by the terminal device, thereby improving flexibility of performing transmission scheduling on the terminal device.

According to a first aspect, a communication method is provided. The method may be applied to a terminal device, and the method includes: receiving first information sent by a network device, where the first information is used to query for capability information of the terminal device; and sending the capability information of the terminal device to the network device based on the first information, where the capability information indicates a first band combination supported by the terminal device, the first band combination includes M bands, the capability information includes second information, the second information indicates N downlink band groups in the first band combination, each of the N downlink band groups includes at least one of the M bands, and both M and N are positive integers.

In the foregoing implementation, when the terminal device reports the capability information of the terminal device, the terminal device reports one or more downlink band groups included in the first band combination, to enable the network device to schedule downlink transmission based on the downlink band group reported by the terminal device. This better adapts to a downlink transmission capability of the terminal device, and improves flexibility of downlink transmission scheduling.

In a possible implementation, the first band combination includes a band that is supported by the terminal device and that is configured for carrier aggregation or dual connectivity and a carrier included in the band; and each of the N downlink band groups includes a band in which the terminal device can simultaneously receive downlink signals.

In a possible implementation, the N downlink band groups include a first downlink band group, and the first downlink band group includes a first band; and the capability information includes third information, the third information indicates a first quantity of carriers supported by the first band for receiving downlink signals, and the first quantity is a maximum quantity of carriers on which the terminal device can simultaneously receive downlink signals in the first band.

Optionally, the first quantity is less than or equal to a second quantity of carriers for receiving downlink signals in the first band. For example, if a quantity of carriers for receiving downlink signals in the first band is 2 (that is, the second quantity is equal to 2), and the third information corresponding to the first band indicates one carrier (that is, the first quantity is equal to 1), it indicates that in a carrier aggregation or dual connectivity scenario, the terminal device may simultaneously receive downlink signals on one carrier in the first band and a carrier in another band in the first band combination.

Because the third information indicates the first quantity of carriers supported by the first band for receiving downlink signals (the first quantity is the maximum quantity of carriers on which the terminal device can simultaneously receive downlink signals in the first band), when scheduling the terminal device, the network device can control the terminal device to simultaneously receive downlink signals on no more than a first quantity of carriers in the first band, to ensure that scheduling of the terminal device does not exceed the downlink transmission capability of the terminal device.

In a possible implementation, the capability information further indicates a first uplink transmission capability corresponding to the first band combination or a second uplink transmission capability corresponding to the first band combination, the first uplink transmission capability indicates that the terminal device sends an uplink signal in different bands of the first band combination through uplink transmit channel switching, and the second uplink transmission capability indicates that the terminal device simultaneously sends uplink signals in a band of the first band combination.

Because the capability information reported by the terminal may indicate whether an uplink transmission capability corresponding to the first band combination is the first uplink transmission capability or the second uplink transmission capability, when performing uplink transmission scheduling on the terminal device, the network device may perform uplink transmission scheduling on the terminal device based on the uplink transmission capability supported by the terminal device on the first band combination, thereby improving flexibility of performing transmission scheduling on the terminal device.

In a possible implementation, the method further includes: receiving scheduling information sent by the network device, where the scheduling information indicates the terminal device to receive downlink signals on K carriers, the K carriers are carriers included in the first downlink band group, the first downlink band group is one of the N downlink band groups, and K is a positive integer; and receiving the downlink signals on the K carriers based on the scheduling information.

Optionally, K may be less than or equal to a quantity of carriers included in the first downlink band group. In other words, a quantity of carriers scheduled by the network device for receiving downlink signals does not exceed a quantity of carriers included in one downlink band group.

According to a second aspect, a communication method is provided. The method may be applied to a network device, and the method includes: sending first information to a terminal device, where the first information is used to query for capability information of the terminal device; and receiving the capability information of the terminal device that is sent by the terminal device, where the capability information indicates a first band combination supported by the terminal device, the first band combination includes M bands, the capability information includes second information, the second information indicates N downlink band groups in the first band combination, each of the N downlink band groups includes at least one of the M bands, and both M and N are positive integers.

In a possible implementation, the first band combination includes a band that is supported by the terminal device and that is configured for carrier aggregation or dual connectivity and a carrier included in the band; and each of the N downlink band groups includes a band in which the terminal device can simultaneously receive downlink signals.

In a possible implementation, the N downlink band groups include a first downlink band group, and the first downlink band group includes a first band; and the capability information includes third information, the third information indicates a first quantity of carriers supported by the first band for receiving downlink signals, and the first quantity is a maximum quantity of carriers on which the terminal device can simultaneously receive downlink signals in the first band.

In a possible implementation, the method further includes: sending first scheduling information to the terminal device, where the first scheduling information indicates the terminal device to receive downlink signals on K carriers, the K carriers are carriers included in the first downlink band group, the K carriers include K1 carriers that are in the first band and that are for receiving downlink signals, K1 is less than or equal to the first quantity indicated by the third information, both K and K1 are positive integers, and K1 is less than K; and sending the downlink signals to the terminal device on the K carriers.

In a possible implementation, the method further includes: sending first scheduling information to the terminal device, where the first scheduling information indicates the terminal device to receive downlink signals on K carriers, the K carriers are carriers included in a first downlink band group, the first downlink band group is one of the N downlink band groups, and K is a positive integer; and sending the downlink signals to the terminal device on the K carriers.

In a possible implementation, the capability information further indicates a first uplink transmission capability corresponding to the first band combination or a second uplink transmission capability corresponding to the first band combination, an uplink transmission capability includes one of the first uplink transmission capability and the second uplink transmission capability, the first uplink transmission capability indicates that the terminal device sends an uplink signal in different bands of the first band combination through uplink transmit channel switching, and the second uplink transmission capability indicates that the terminal device simultaneously sends uplink signals in a band of the first band combination.

In a possible implementation, the uplink transmission capability corresponding to the first band combination is the second uplink transmission capability; and the method further includes: determining P carriers based on a carrier that is included in the first band combination and that is for sending an uplink signal, where P is a positive integer; sending second scheduling information to the terminal device, where the second scheduling indicates the terminal device to send uplink signals on the P carriers by using a maximum multiple-input multiple-output MIMO capability of the P carriers; and receiving, on the P carriers, the uplink signals sent by the terminal device.

According to a third aspect, a communication method is provided. The method may be applied to a terminal device, and the method includes: receiving first information sent by a network device, where the first information is used to query for capability information of the terminal device; and sending the capability information of the terminal device to the network device based on the first information, where the capability information indicates a maximum downlink bandwidth part (BWP) bandwidth and/or a maximum uplink BWP bandwidth that are/is supported by a first component carrier, and the maximum downlink BWP bandwidth supported by the first component carrier is less than or equal to a maximum downlink channel bandwidth of the first component carrier.

In the foregoing implementation, the terminal device may report different downlink BWP bandwidths and/or uplink BWP bandwidths that are supported by the terminal device, to implement decoupling between the uplink BWP bandwidth and the downlink BWP bandwidth. The network device may configure a BWP for the terminal device based on a BWP bandwidth capability reported by the terminal device. Specifically, when configuring a large carrier bandwidth, the network device may restrict the terminal device to schedule the terminal device on a small downlink BWP bandwidth to perform downlink transmission, or restrict the terminal device to schedule the terminal device on a small uplink BWP bandwidth to perform uplink transmission. Compared with a related technology in which the network device configures a same carrier bandwidth for the terminal device for uplink and downlink transmission, in the foregoing implementation of this application, more flexible uplink and downlink transmission scheduling can be implemented. For example, the downlink BWP bandwidth supported by the terminal device can be less than the uplink BWP bandwidth. When an uplink high rate requirement is met, a downlink capability of the terminal device can be reduced, thereby reducing implementation costs of the terminal device.

In a possible implementation, the first component carrier is a component carrier in a first band in a first band combination.

Optionally, the capability information of the terminal device includes a capability of the first component carrier, the capability of the first component carrier includes an uplink capability and a downlink capability, the uplink capability includes the maximum uplink BWP bandwidth supported by the first component carrier, and the downlink capability includes a maximum downlink BWP bandwidth supported by the first component carrier.

In the foregoing implementation, a maximum downlink BWP bandwidth and/or a maximum uplink BWP bandwidth that are/is supported by a component carrier in a band combination may be reported based on a granularity of the component carrier.

In a possible implementation, the maximum uplink BWP bandwidth supported by the first component carrier is equal to the maximum downlink channel bandwidth of the first component carrier. Because the maximum uplink BWP bandwidth supported by the first component carrier is equal to the maximum downlink channel bandwidth of the first component carrier, a "maximum uplink BWP" is not equal to a "maximum downlink BWP", thereby implementing decoupling between uplink and downlink BWPs.

In a possible implementation, the maximum uplink BWP bandwidth supported by the first component carrier is less than or equal to a maximum uplink channel bandwidth of the first component carrier. Because the maximum uplink BWP bandwidth supported by the first component carrier is less than or equal to the maximum uplink channel bandwidth of the first component carrier, when performing uplink transmission scheduling on the terminal device, the network device may schedule the terminal device in a capability range of the maximum uplink channel bandwidth supported by the terminal device based on a requirement, thereby improving flexibility.

In a possible implementation, the method further includes: receiving configuration information sent by the network device, where the configuration information indicates a downlink BWP bandwidth of the first component carrier, and the downlink BWP bandwidth of the first component carrier is less than or equal to the maximum downlink BWP bandwidth supported by the first component carrier; and receiving a downlink signal on a downlink BWP of the first component carrier.

In a possible implementation, the method further includes: receiving configuration information sent by the network device, where the configuration information indicates an uplink BWP bandwidth of the first component carrier, and the uplink BWP bandwidth of the first component carrier is less than or equal to the maximum uplink BWP bandwidth supported by the first component carrier; and sending an uplink signal on an uplink BWP of the first component carrier.

According to a fourth aspect, a communication method is provided. The method may be applied to a network device, and the method includes: sending first information to a terminal device, where the first information is used to query for capability information of the terminal device; and receiving the capability information of the terminal device that is sent by the terminal device, where the capability information indicates a maximum downlink BWP bandwidth and/or a maximum uplink BWP bandwidth that are/is supported by a first component carrier, and the maximum downlink BWP bandwidth supported by the first component carrier is less than or equal to a maximum downlink channel bandwidth of the first component carrier.

In a possible implementation, the first component carrier is a component carrier in a first band in a first band combination.

In a possible implementation, the maximum uplink BWP bandwidth supported by the first component carrier is equal to the maximum downlink channel bandwidth of the first component carrier.

In a possible implementation, the maximum uplink BWP bandwidth supported by the first component carrier is less than or equal to a maximum uplink channel bandwidth of the first component carrier.

In a possible implementation, the method further includes: determining a first downlink BWP bandwidth of the first component carrier based on the maximum downlink BWP bandwidth supported by the first component carrier, where the first downlink BWP bandwidth is less than or equal to the maximum downlink BWP bandwidth of the first component carrier; sending configuration information to the terminal device, where the configuration information indicates the first downlink BWP bandwidth; and sending a downlink signal to the terminal device on a first downlink BWP.

In a possible implementation, the method further includes: determining a first uplink BWP bandwidth of the first component carrier based on the maximum uplink BWP bandwidth supported by the first component carrier, where the first uplink BWP bandwidth is less than or equal to the maximum uplink BWP bandwidth of the first component carrier; sending configuration information to the terminal device, where the configuration information indicates the first uplink BWP bandwidth; and receiving, on a first uplink BWP, an uplink signal sent by the terminal device.

According to a fifth aspect, a communication method is provided. The method may include: A network device sends first information to a terminal device, where the first information is used to query for capability information of the terminal device. The terminal device sends the capability information of the terminal device to the network device based on the first information, where the capability information of the terminal device indicates a feature set of a first band in a first band combination, and the feature set of the first band includes an uplink feature set but does not include a downlink feature set. The network device sends configuration information to the terminal device based on the feature set of the first band, where the configuration information indicates the terminal device to send an uplink signal on a first carrier of the first band, and not to receive a downlink signal on the first carrier of the first band. The terminal device sends the uplink signal to the network device on the first carrier of the first band.

In the foregoing implementation, a quantity of carriers configured for uplink transmission may be greater than a quantity of carriers configured for downlink transmission. In other words, a carrier (or a cell) may be allowed to be configured with no downlink BWP (for example, configured with no initial BWP, where the initial BWP is also referred to as an initial BWP or a BWP #0), but the carrier (or the cell) has an uplink BWP configuration. According to the method, a quantity of carriers of a downlink configuration can be enabled to be less than a quantity of carriers of an uplink configuration, so that a downlink capability of the terminal device can be reduced while an uplink high rate requirement is ensured, and implementation costs of the terminal device can be reduced. The foregoing method does not make too many modifications to an existing protocol, so that implementation costs are low.

According to a sixth aspect, a communication method is provided. The method may be applied to a terminal device, and the method includes: receiving first information sent by a network device, where the first information is used to query for capability information of the terminal device; and sending the capability information of the terminal device to the network device based on the first information, where the capability information of the terminal device indicates a feature set of a first band in a first band combination, and the feature set of the first band includes an uplink feature set but does not include a downlink feature set.

In a possible implementation, in the capability information of the terminal device, a value of an identifier of the uplink feature set is not 0, and a value of an identifier of the downlink feature set is equal to 0.

According to a seventh aspect, a communication method is provided. The method may be applied to a network device, and the method includes: sending first information to a terminal device, where the first information is used to query for capability information of the terminal device; and receiving the capability information of the terminal device that is sent by the terminal device, where the capability information of the terminal device indicates a feature set of a first band in a first band combination, and the feature set of the first band includes an uplink feature set but does not include a downlink feature set.

In a possible implementation, in the capability information of the terminal device, a value of an identifier of the uplink feature set is not 0, and a value of an identifier of the downlink feature set is equal to 0.

According to an eighth aspect, a communication apparatus is provided. The communication apparatus may perform the method according to any implementation of the first aspect. The communication apparatus may include a processing unit and a transceiver unit. The transceiver unit is configured to receive first information sent by a network device, where the first information is used to query for capability information of a terminal device. The processing unit is configured to send the capability information of the terminal device to the network device based on the first information through the transceiver unit, where the capability information indicates a first band combination supported by the terminal device, the first band combination includes M bands, the capability information includes second information, the second information indicates N downlink band groups in the first band combination, each of the N downlink band groups includes at least one of the M bands, and both M and N are positive integers.

In a possible implementation, the first band combination includes a band that is supported by the terminal device and that is configured for carrier aggregation or dual connectivity and a carrier included in the band; and each of the N downlink band groups includes a band in which the terminal device can simultaneously receive downlink signals.

In a possible implementation, the N downlink band groups include a first downlink band group, and the first downlink band group includes a first band; and the capability information includes third information, the third information indicates a first quantity of carriers supported by the first band for receiving downlink signals, and the first quantity is a maximum quantity of carriers on which the terminal device can simultaneously receive downlink signals in the first band.

In a possible implementation, the capability information further indicates a first uplink transmission capability corresponding to the first band combination or a second uplink transmission capability corresponding to the first band combination, the first uplink transmission capability indicates that the terminal device sends an uplink signal in different bands of the first band combination through uplink transmit channel switching, and the second uplink transmission capability indicates that the terminal device simultaneously sends uplink signals in a band of the first band combination.

In a possible implementation, the transceiver unit is further configured to receive scheduling information sent by the network device, where the scheduling information indicates the terminal device to receive downlink signals on K carriers, the K carriers are carriers included in the first downlink band group, the first downlink band group is one of the N downlink band groups, and K is a positive integer; and the processing unit is further configured to receive the downlink signals on the K carriers based on the scheduling information through the transceiver unit.

According to a ninth aspect, a communication apparatus is provided. The communication apparatus may perform the method according to any implementation of the second aspect. The communication apparatus may include a processing unit and a transceiver unit. The processing unit is configured to send first information to a terminal device through the transceiver unit, where the first information is used to query for capability information of the terminal device. The transceiver unit is configured to receive the capability information of the terminal device that is sent by the terminal device, where the capability information indicates a first band combination supported by the terminal device, the first band combination includes M bands, the capability information includes second information, the second information indicates N downlink band groups in the first band combination, each of the N downlink band groups includes at least one of the M bands, and both M and N are positive integers.

In a possible implementation, the first band combination includes a band that is supported by the terminal device and that is configured for carrier aggregation or dual connectivity and a carrier included in the band; and each of the N downlink band groups includes a band in which the terminal device can simultaneously receive downlink signals.

In a possible implementation, the N downlink band groups include a first downlink band group, and the first downlink band group includes a first band; and the capability information includes third information, the third information indicates a first quantity of carriers supported by the first band for receiving downlink signals, and the first quantity is a maximum quantity of carriers on which the terminal device can simultaneously receive downlink signals in the first band.

In a possible implementation, the processing unit is further configured to send first scheduling information to the terminal device through the transceiver unit, where the first scheduling information indicates the terminal device to receive downlink signals on K carriers, the K carriers are carriers included in the first downlink band group, the K carriers include K1 carriers that are in the first band and that are for receiving downlink signals, K1 is less than or equal to the first quantity indicated by the third information, both K and K1 are positive integers, and K1 is less than K; and the processing unit is further configured to send the downlink signals to the terminal device on the K carriers through the transceiver unit.

In a possible implementation, the processing unit is further configured to send first scheduling information to the terminal device through the transceiver unit, where the first scheduling information indicates the terminal device to receive downlink signals on K carriers, the K carriers are carriers included in a first downlink band group, the first downlink band group is one of the N downlink band groups, and K is a positive integer; and the processing unit is further configured to send the downlink signals to the terminal device on the K carriers through the transceiver unit.

In a possible implementation, the capability information further indicates a first uplink transmission capability corresponding to the first band combination or a second uplink transmission capability corresponding to the first band combination, an uplink transmission capability includes one of the first uplink transmission capability and the second uplink transmission capability, the first uplink transmission capability indicates that the terminal device sends an uplink signal in different bands of the first band combination through uplink transmit channel switching, and the second uplink transmission capability indicates that the terminal device simultaneously sends uplink signals in a band of the first band combination.

In a possible implementation, the uplink transmission capability corresponding to the first band combination is the second uplink transmission capability; and the processing unit is further configured to: determine P carriers based on a carrier that is included in the first band combination and that is for sending an uplink signal, where P is a positive integer; send second scheduling information to the terminal device through the transceiver unit, where the second scheduling indicates the terminal device to send uplink signals on the P carriers by using a maximum multiple-input multiple-output MIMO capability of the P carriers; and receive, on the P carriers, the uplink signals sent by the terminal device.

According to a tenth aspect, a communication apparatus is provided. The communication apparatus may perform the method according to any implementation of the third aspect. The communication apparatus may include a processing unit and a transceiver unit. The transceiver unit is configured to: receive first information sent by a network device, where the first information is used to query for capability information of a terminal device; and send the capability information of the terminal device to the network device based on the first information through the transceiver unit, where the capability information indicates a maximum downlink BWP bandwidth and/or a maximum uplink BWP bandwidth that are/is supported by a first component carrier, and the maximum downlink BWP bandwidth supported by the first component carrier is less than or equal to a maximum downlink channel bandwidth of the first component carrier.

In a possible implementation, the first component carrier is a component carrier in a first band in a first band combination.

In a possible implementation, the maximum uplink BWP bandwidth supported by the first component carrier is equal to the maximum downlink channel bandwidth of the first component carrier.

In a possible implementation, the maximum uplink BWP bandwidth supported by the first component carrier is less than or equal to a maximum uplink channel bandwidth of the first component carrier.

In a possible implementation, the transceiver unit is further configured to receive configuration information sent by the network device, where the configuration information indicates a downlink BWP bandwidth of the first component carrier, and the downlink BWP bandwidth of the first component carrier is less than or equal to the maximum downlink BWP bandwidth supported by the first component carrier; and the processing unit is further configured to receive a downlink signal on a downlink BWP of the first component carrier through the transceiver unit.

In a possible implementation, the transceiver unit is further configured to receive configuration information sent by the network device, where the configuration information indicates an uplink BWP bandwidth of the first component carrier, and the uplink BWP bandwidth of the first component carrier is less than or equal to the maximum uplink BWP bandwidth supported by the first component carrier; and the processing unit is further configured to send an uplink signal on an uplink BWP of the first component carrier through the transceiver unit.

According to an eleventh aspect, a communication apparatus is provided. The communication apparatus may perform the method according to any implementation of the fourth aspect. The communication apparatus may include a processing unit and a transceiver unit. The processing unit is configured to: send first information to a terminal device through the transceiver unit, where the first information is used to query for capability information of the terminal device; and receive the capability information of the terminal device that is sent by the terminal device, where the capability information indicates a maximum downlink BWP bandwidth and/or a maximum uplink BWP bandwidth that are/is supported by a first component carrier, and the maximum downlink BWP bandwidth supported by the first component carrier is less than or equal to a maximum downlink channel bandwidth of the first component carrier.

In a possible implementation, the first component carrier is a component carrier in a first band in a first band combination.

In a possible implementation, the maximum uplink BWP bandwidth supported by the first component carrier is equal to the maximum downlink channel bandwidth of the first component carrier.

In a possible implementation, the maximum uplink BWP bandwidth supported by the first component carrier is less than or equal to a maximum uplink channel bandwidth of the first component carrier.

In a possible implementation, the processing unit is further configured to: determine a first downlink BWP bandwidth of the first component carrier based on the maximum downlink BWP bandwidth supported by the first component carrier, where the first downlink BWP bandwidth is less than or equal to the maximum downlink BWP bandwidth of the first component carrier; send configuration information to the terminal device through the transceiver unit, where the configuration information indicates the first downlink BWP bandwidth; and send a downlink signal to the terminal device on a first downlink BWP.

In a possible implementation, the processing unit is further configured to: determine a first uplink BWP bandwidth of the first component carrier based on the maximum uplink BWP bandwidth supported by the first component carrier, where the first uplink BWP bandwidth is less than or equal to the maximum uplink BWP bandwidth of the first component carrier; send configuration information to the terminal device through the transceiver unit, where the configuration information indicates the first uplink BWP bandwidth; and receive, on a first uplink BWP, an uplink signal sent by the terminal device.

According to a twelfth aspect, a communication apparatus is provided. The communication apparatus may perform the method according to any implementation of the sixth aspect. The communication apparatus may include a processing unit and a transceiver unit. The transceiver unit is configured to receive first information sent by a network device, where the first information is used to query for capability information of a terminal device. The processing unit is configured to send the capability information of the terminal device to the network device based on the first information through the transceiver unit, where the capability information of the terminal device indicates a feature set of a first band in a first band combination, and the feature set of the first band includes an uplink feature set but does not include a downlink feature set.

In a possible implementation, in the capability information of the terminal device, a value of an identifier of the uplink feature set is not 0, and a value of an identifier of the downlink feature set is equal to 0.

According to a thirteenth aspect, a communication apparatus is provided. The communication apparatus may perform the method according to any implementation of the seventh aspect. The communication apparatus may include a processing unit and a transceiver unit. The processing unit is configured to send first information to a terminal device through the transceiver unit, where the first information is used to query for capability information of the terminal device. The transceiver unit is configured to receive the capability information of the terminal device that is sent by the terminal device, where the capability information of the terminal device indicates a feature set of a first band in a first band combination, and the feature set of the first band includes an uplink feature set but does not include a downlink feature set.

In a possible implementation, in the capability information of the terminal device, a value of an identifier of the uplink feature set is not 0, and a value of an identifier of the downlink feature set is equal to 0.

According to a fourteenth aspect, a communication apparatus is provided. The communication apparatus includes a unit or module configured to perform the method according to any implementation of the first aspect, a unit or module configured to perform the method according to any implementation of the third aspect, or a unit or module configured to perform the method according to any implementation of the sixth aspect.

According to a fifteenth aspect, a communication apparatus is provided. The communication apparatus includes a unit or module configured to perform the method according to any implementation of the second aspect, a unit or module configured to perform the method according to any implementation of the fourth aspect, or a unit or module configured to perform the method according to any implementation of the seventh aspect.

According to a sixteenth aspect, a communication apparatus is provided. The communication apparatus includes one or more processors and one or more memories. The one or more memories store one or more programs. When the program is executed by the one or more processors, the apparatus is enabled to perform the method according to any implementation of the first aspect to the fourth aspect, the sixth aspect, and the seventh aspect.

According to a seventeenth aspect, a chip system is provided. The chip system includes at least one chip and a memory. The at least one chip is configured to read and execute a program stored in the memory, to implement the method according to any implementation of the first aspect to the fourth aspect, the sixth aspect, and the seventh aspect.

According to an eighteenth aspect, a readable storage medium is provided. The readable storage medium includes a program. When the program is run on an apparatus, the apparatus is enabled to perform the method according to any implementation of the first aspect to the fourth aspect, the sixth aspect, and the seventh aspect.

According to a nineteenth aspect, a program product is provided. When the program product runs on an apparatus, the apparatus is enabled to perform the method according to any implementation of the first aspect to the fourth aspect, the sixth aspect, and the seventh aspect.

### BRIEF DESCRIPTION OF DRAWINGS

FIG. 1 is a diagram of an architecture of a mobile communication system to which an embodiment of this application is applied;
FIG. 2 is a diagram of a terminal capability enquiry and reporting procedure to which an embodiment of this application is applied;
FIG. 3 is a diagram of a hierarchical structure of capabilities of a terminal device in a related technology;
FIG. 4 is a diagram of reporting different per BC per band capabilities in one BC by using a plurality of rows of FSs in a related technology;
FIG. 5 is a schematic flowchart of a communication method according to an embodiment of this application;
FIG. 6 is a diagram of indicating, by a terminal device, a plurality of downlink band groups by using a plurality of rows of feature sets according to an embodiment of this application;
FIG. 7 is a diagram of a data structure of capability information of a terminal device according to an embodiment of this application;
FIG. 8 is a schematic flowchart of scheduling a terminal device to perform downlink transmission according to an embodiment of this application;
FIG. 9 is a possible schematic flowchart of another communication method according to an embodiment of this application;
FIG. 10 is a diagram of capability information reported by a terminal device according to an embodiment of this application;
FIG. 11 is a possible schematic flowchart of another communication method according to an embodiment of this application;
FIG. 12 is a diagram of a maximum downlink channel bandwidth, a maximum downlink BWP bandwidth, and a maximum downlink BWP bandwidth of a first component carrier according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

Embodiments of this application may be applied to various communication systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system, or applied to a future communication system, another similar communication system, or the like.

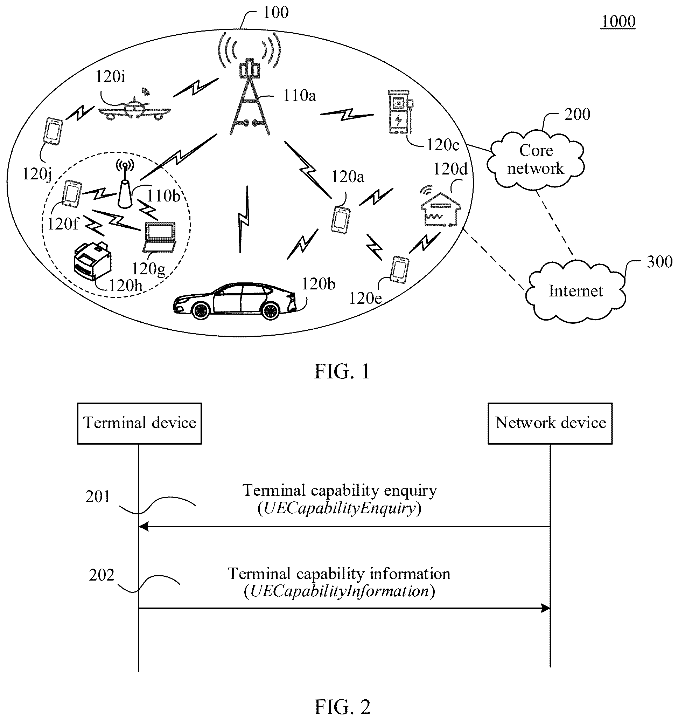

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device may be integrated into a same physical device, or some functions of the core network device and some functions of the radio access network device may be integrated into one physical device. Terminals may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at fixed locations or may be movable. The network device and the terminal may be deployed on land, where the deployment includes indoor or outdoor, and handheld or vehicle-mounted deployment; may be deployed on water; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal 120j that accesses the radio access network 100 through 120i, the uncrewed aerial vehicle 120i is a network device. However, for the network device 110a, 120i is a terminal. In other words, 110a and 120i communicate with each other according to a wireless air interface protocol. Certainly, 110a and 120i may alternatively communicate with each other according to an interface protocol between network devices. In this case, for 110a, 120i is also a network device. Therefore, both the network device and the terminal may be collectively referred to as communication apparatuses. 110a and 110b in FIG. 1 may be referred to as communication apparatuses having functions of the network device, and 120a to 120j in FIG. 1 may be referred to as communication apparatuses having functions of the terminal.

Communication between a network device and a terminal, between network devices, or between terminals may be performed through a licensed spectrum, may be performed through an unlicensed spectrum, or may be performed through both a licensed spectrum and an unlicensed spectrum. Communication may be performed through a spectrum below 6 gigahertz (gigahertz, GHz), may be performed through a spectrum above 6 GHz, or may be performed through both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus including the function of the terminal.

In embodiments of this application, the network device sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal.

To make objectives, technical solutions, and advantages of this application clearer, the following further describes this application in detail with reference to accompanying drawings. A specific operation method in a method embodiment may also be applied to an apparatus embodiment or a system embodiment.

The following describes some terms in embodiments of this application, to facilitate understanding of a person skilled in the art.

### (1) Transmit channel (transmitter, Tx)

A radio frequency (radio frequency, RF) transmit channel is briefly referred to as a transmit channel, and is a physical concept. The transmit channel may receive a baseband signal from a baseband chip, perform radio frequency processing (such as up-conversion, amplification, and filtering) on the baseband signal to obtain a radio frequency signal, and finally radiate the radio frequency signal into space through an antenna. Specifically, the transmit channel may include one or more of electronic devices such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic devices may be integrated into one or more chips based on a requirement. The antenna may also be considered as a part of the transmit channel sometimes.

In embodiments of this application, the transmit channel may also be replaced with Tx, an antenna, radio frequency, a radio frequency chain, a transmit port, a quantity of radio frequency chains, a quantity of transmission layers, a maximum quantity of transmission layers, a maximum quantity of layers supported for transmission, a receive channel, or any combination thereof.

### (2) Bandwidth part (bandwidth part, BWP)

The BWP is a segment of contiguous spectrum resources configured by a network for a terminal device, and the terminal device performs data transmission on the BWP. The BWP may be less than or equal to a carrier bandwidth configured by the network. Therefore, flexible transmission bandwidth configuration can be implemented. A maximum of four BWPs, including four uplink BWPs and four downlink BWPs, may be configured on a carrier corresponding to one cell. Different BWPs may have different configurations, for example, different bandwidth sizes. Therefore, the network may switch between BWPs based on a requirement of a data traffic volume or the like. When data traffic is low, the network may also reduce power consumption of the terminal device by configuring a small BWP bandwidth.

### (3) Carrier aggregation (carrier aggregation, CA) technology

The carrier aggregation technology means that a plurality of carriers are used to simultaneously provide a service for a terminal device, and a plurality of component carriers (component carrier, CC) are aggregated, so that a communication bandwidth can be increased, and a peak rate can be increased. Each carrier may have at least one serving cell component carrier working for the terminal device. In the carrier aggregation technology, usually, there is one carrier serving as a primary cell (primary cell, PCell), and another serving cell is a secondary cell (secondary cell, Scell). The secondary cell may be activated or deactivated in a process of using the secondary cell. For example, a network may deactivate the secondary cell if no data is transmitted for a period of time, and may re-activate the secondary cell when data is subsequently sent.

Carrier aggregation is classified into intra-band carrier aggregation and inter-band carrier aggregation. The intra-band carrier aggregation means aggregation of a plurality of carriers in a single band (band, which is also referred to as a frequency band), and the inter-band carrier aggregation means aggregation of a plurality of carriers in a plurality of bands. An example of the inter-band carrier aggregation is as follows: A band combination includes three bands: a band A, a band B, and a band C. There is one carrier in the band A, there are two carriers in the band B, and there are two carriers in the band C. In this case, carrier aggregation may be performed on the one carrier in the band A, the two carriers in the band B, and the two carriers in the band C.

### (4) Dual connectivity (dual connectivity, DC)

Dual connectivity is an operation mode used to enhance cellular cell connectivity of a wireless network. A purpose of dual connectivity is to improve a throughput of a terminal device by using radio resources of a plurality of carriers. In dual connectivity, a terminal device that is in a radio resource control (radio resource control, RRC) connected (RRC connected) mode and that has a plurality of receive/transmit (Rx/Tx) functions may be configured to use radio resources of two base stations with two different scheduling procedures. The two base stations separately perform non-direct backhaul through an X2 interface. Dual connectivity allows the terminal device to simultaneously send and receive signals on a plurality of carriers in two cell groups through a primary base station and a secondary base station.

Some examples of a dual connectivity scenario may include EN-DC (E_UTRA-NR Dual Connectivity, EN-DC), NE-DC (New Radio E-UTRA Dual Connectivity), and NR-DC (New Radio Dual Connectivity). A type of the dual connectivity scenario is not limited in embodiments of this application.

### (5) Terminal capability enquiry and reporting

Different terminal devices may have different capabilities due to different hardware conditions or different software versions. To better provide a service for a terminal device, a network device needs to know a capability of the terminal device, to configure and schedule the terminal device. The capability of the terminal includes a radio access capability of the terminal device, for example, a PDCP layer capability, a radio link control (radio link control, RLC) layer capability, a MAC layer capability, a physical layer capability, a measurement capability, or a radio frequency capability.

FIG. 2 shows a procedure in which a network device queries for capability information of a terminal device. As shown in FIG. 2, in 201, the network device queries the terminal device for a terminal capability (UECapabilityEnquiry). Correspondingly, in 202, the terminal device sends terminal capability information (UECapabilityInformation) to the network device. For example, the capability information of the terminal device may include the following parameters: a band supported by the terminal device, a band combination, a maximum channel bandwidth capability of a carrier, a quantity of MIMO layers, and a modulation order.

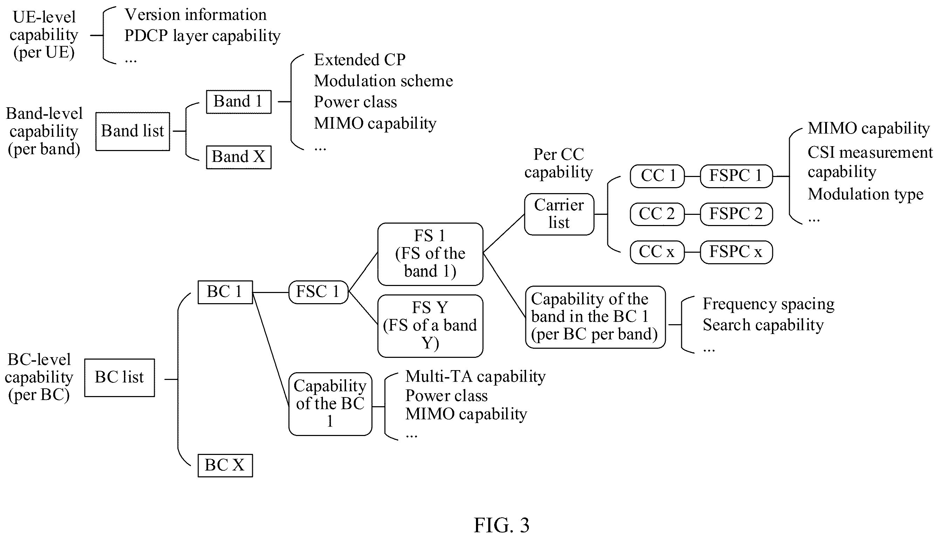

In a 5G system, capabilities of a terminal device may be divided into several levels. FIG. 3 shows an example of a hierarchical structure of capabilities of a terminal device. The hierarchical structure represents a data structure of terminal capability information. As shown in FIG. 3, capability levels of the terminal device may include:
- UE-level capability (which may also be referred to as a terminal device-level capability or per UE capability): The capability is applicable to all bands and band combinations. The per UE capability includes hardware version information and/or software version information, a PDCP layer capability, and the like of the terminal device.
- Band-level capability (which may also be referred to as a band-level capability or per band capability): The capability is usually related to a radio frequency capability of the terminal device. The per band capability may include an extended cyclic prefix (cyclic prefix, CP), a modulation scheme, a power class, a MIMO capability, and the like of a band. The band-level capability supported by the terminal device may be represented by using a data structure of a band list.
- Band combination (band combination, BC)-level capability (which may also be referred to as a BC-level capability or per BC capability): The capability is a capability related to a band combination, and the band combination is mainly related to a carrier aggregation capability and a dual connectivity (dual connectivity, DC) capability supported by the terminal device. One band combination may include one or more bands that are supported by the terminal device and that are configured for carrier aggregation or dual connectivity and a carrier included in the band. In other words, for one band combination reported by the terminal device, a network device may configure, for the terminal device, a carrier included in a band in the band combination for carrier aggregation or dual connectivity transmission. In addition, from a perspective of a capability signaling structure, a capability of a single band or a single carrier may also be reported by using a signaling structure of a band combination. The band combination supported by the terminal device is usually related to the radio frequency capability and a baseband capability of the terminal device.

Information about the per BC capability may use a data structure of a band combination list. The band combination list includes at least one band combination supported by the terminal device, and each band combination indicates a band (band) included in the band combination. Each band combination is associated with a feature set combination (feature set combination, FSC). The FSC includes capability information of each band in the band combination (per BC per band capability) and capability information of a component carrier in the band (per CC capability). The per CC capability is a capability of the component carrier in the band in the band combination. Information about the per CC capability may use a data structure of a carrier list. Each component carrier is associated with a feature set per component carrier (feature set per CC, FSPC), and the FSPC indicates a capability of the corresponding component carrier. For example, in FIG. 3, a band 1 in a band combination BC 1 may correspond to one carrier list, and the carrier list includes three component carriers (a CC 1, a CC 2, and a CC x), indicating that the terminal device supports a maximum of three contiguous component carriers in the band 1. The CC 1 is used as an example. The CC 1 is associated with an FSPC 1, and the FSPC 1 indicates a MIMO capability, a channel state information (channel state information, CSI) measurement capability, a modulation type, and the like of the CC 1. Each FSPC includes a FeatureSetDownlinkPerCC information element used to report a downlink transmission capability and a FeatureSetUplinkPerCC information element used to report an uplink transmission capability, to respectively indicate a downlink transmission capability and an uplink transmission capability of the terminal device. Therefore, the per CC capability may also be referred to as a feature set per component carrier (feature set per CC, FSPC) capability.

To reduce signaling overheads, the feature set (FS) and the feature set per component carrier (FSPC) may be indexed by using corresponding identifiers (ID). For example, if FS capabilities corresponding to a band A and a band B are the same, the two bands may be associated with a same FS ID. For another example, if there are two contiguous component carriers (a CC 1 and a CC 2) in a band A, and capabilities of the CC 1 and the CC 2 are the same, the two component carriers may be associated with a same FSPC ID. In this way, repeated reporting of a same capability parameter can be avoided, and signaling overheads can be reduced.

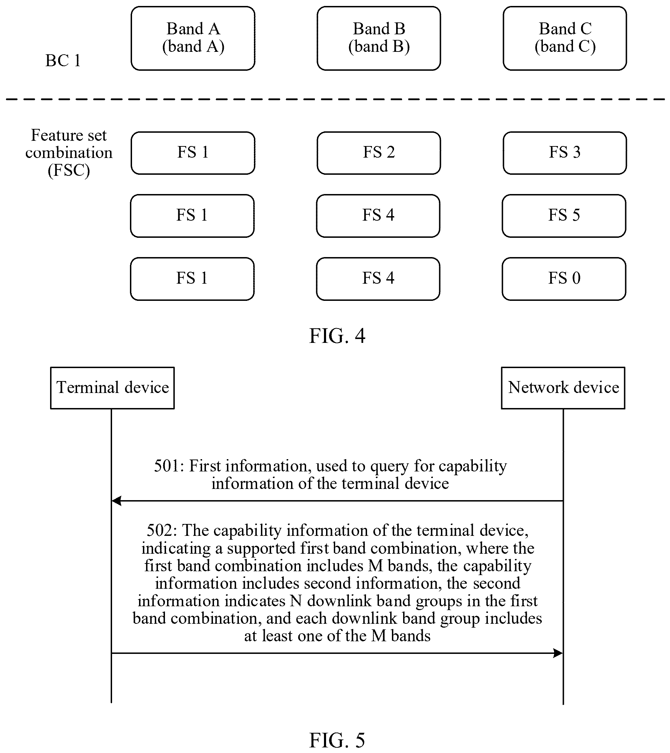

The terminal device may report a combination of per BC per band capabilities in one band combination by reporting one or more rows of feature sets (FS). FIG. 4 is an example of a diagram of reporting different capabilities (including, for example, per CC capabilities and/or per BC per band capabilities) of one band combination by using a plurality of rows of feature sets (FS) in a capability signaling structure. As shown in FIG. 4, a band combination BC 1 includes a band A, a band B, and a band C. For the band combination BC 1, the terminal device may report three rows of FSs, and each row of FSs corresponds to a combination of BC capabilities that can be supported by the terminal device. In a first row of FSs, an FS of the band A is an FS 1 (which may be understood as that an ID of the FS is 1, where the following descriptions are similar), an FS of the band B is an FS 2, and an FS of the band C is an FS 3. The FSs may be considered as a combination of BC capabilities that can be configured by the network for the terminal device. In a second row of FSs, an FS of the band A is still the FS 1, an FS of the band B is an FS 4, and an FS of the band C is an FS 5. Because the FS of the band B is different from the FS of the band B in the first row of FSs, and the FS of the band C is different from the FS of the band C in the first row of FSs, a combination of BC capabilities corresponding to the second row of FSs is different from that corresponding to the first row. Different FSs correspond to different carrier capabilities. For example, the terminal device supports four carriers. In the first row of FSs, the terminal device may report that there is one carrier in the band A (indicating that the terminal device supports one component carrier in the band A, where the following descriptions are similar), there is one carrier in the band B, and there are two carriers in the band C; and in the second row of FSs, the terminal device may report that there is one carrier in the band A, there are two carriers in the band B, and there is one carrier in the band C. Based on capability information reported by the terminal device shown in FIG. 4, when configuring the band combination BC 1 for the terminal device, the network device may configure, based on a feature set of each band in a same row of FSs, a carrier on which the terminal device works. When the network device needs to switch a configuration, the network device may send RRC reconfiguration signaling to the terminal device, to indicate the terminal device to switch to a configuration corresponding to the second row of feature sets.

An FS identifier (FS ID) of a band may be 0. For example, in the third row of FSs in FIG. 4, an FS ID of the band C is an FS 0, indicating that the terminal device does not have an uplink transmission capability and a downlink transmission capability in the band C, that is, the terminal device does not support receiving of a downlink signal and sending of an uplink signal on a carrier of the band C.

### (6) Uplink antenna switching (or referred to as uplink transmit channel switching)

In a carrier aggregation operation, concurrent transmission on a plurality of carriers is allowed. For example, if a terminal device supports downlink transmission and uplink transmission on two component carriers, the terminal device may simultaneously receive downlink signals and simultaneously send uplink signals on the two component carriers. When uplink signal sending is performed on a carrier, there may be two modes: single transmission and dual transmission. If the terminal device has two transmit channels, and terminal capability information reported by the terminal device indicates that the terminal device supports two MIMO layers on one carrier, it indicates that the terminal device may support dual transmission on the carrier. If terminal capability information reported by the terminal device indicates that the terminal device supports two MIMO layers on two carriers, that is, the terminal device may simultaneously perform sending on the two carriers through two-layer MIMO, the terminal device needs to support four transmit channels. Limited by costs of the terminal device, a quantity of transmit channels of the terminal device is limited. For example, the terminal device supports only two radio frequency channels. The terminal device may report two optional capabilities shown in Table 1, and a base station can select only one capability to configure a working mode of the terminal device. If the base station selects a capability 2, two carriers (a band A and a band B) may be configured for the terminal device, and each carrier supports only one-layer MIMO. The base station may indicate, by using RRC reconfiguration signaling, the terminal device to switch from the capability 2 to a capability 1, that is, indicate the terminal device to perform sending in the band A through two-layer MIMO.

**Table 1: Terminal capabilities reported by the terminal device**

| Capability indicated by an FSC | Band A | Band B |
|---|---|---|
| Capability 1 | CC 1 (two-layer MIMO) | |
| Capability 2 | CC 1 (one-layer MIMO) | CC 2 (one-layer MIMO) |

To improve efficiency, a concept of transmit channel switching (Tx switching) is introduced in a communication standard. When reporting a capability of the terminal device, the terminal device may report a maximum quantity of MIMO layers supported on each of a plurality of carriers, and notify the base station that the maximum quantity of MIMO layers cannot be used on the plurality of carriers when the terminal device is configured and scheduled. For example, as shown in Table 2, the terminal device reports that the terminal device can support two-layer MIMO on a CC 1 of a band A and a CC 2 of a band B, and support two-layer MIMO on the CC 2 of the band B and a CC 3 of a band C, and notifies the base station that the terminal device cannot perform 2+2 MIMO transmission (that is, cannot simultaneously perform sending on two carriers through two-layer MIMO), to ensure that a capability of the terminal device is not exceeded. Based on a capability 1 reported by the terminal device, the base station may configure a maximum of two carriers (for example, the CC 1+the CC 2) for the terminal device, and control, through scheduling, the terminal device to switch between several transmit modes shown in Table 3.

**Table 2: Terminal capabilities reported by the terminal device**

| Capability indicated by an FSC | Band A | Band B | Band C |
|---|---|---|---|
| Capability 1 | CC 1 (two-layer MIMO) | CC 2 (two-layer MIMO) | |
| Capability 2 | | CC 2 (two-layer MIMO) | CC 3 (two-layer MIMO) |

**Table 3: Schedulable transmit modes of the terminal device**

| | Band A | Band B |
|---|---|---|
| Transmit mode 1 | CC 1 (two-layer MIMO) | CC 2 (no sending) |
| Transmit mode 2 | CC 1 (no sending) | CC 2 (two-layer MIMO) |
| Transmit mode 3 | CC 1 (one-layer MIMO) | CC 2 (one-layer MIMO) |

A network device may indicate, by using scheduling signaling, the terminal device to switch between the transmit modes shown in Table 3, instead of performing RRC reconfiguration, so that efficiency of changing a transmit manner between carriers can be improved. To ensure backward compatibility, a band combination that supports an uplink transmit channel switching (UL Tx Switching) capability in an uplink direction is reported in a separate band combination list (supportedBandCombinationList-UplinkTxSwitch). Uplink scheduling of a band in the band combination list needs to comply with Tx switch.

With development of mobile communication networks, users have increasing requirements for uplink rates. For example, compared with conventional services such as online watching and video downloading, with emergence of new services such as self-media, augmented reality (augmented reality, AR)/virtual reality (virtual reality, VR), and uncrewed aerial vehicles, users have higher rate requirements for uplink services than for downlink services. For the foregoing scenario, a conventional uplink carrier aggregation technology requires that a terminal device also needs to support a high downlink carrier aggregation capability in a downlink direction, and consequently system flexibility is low, and a significant challenge is brought to implementation costs and power consumption of the terminal device. Therefore, on a premise of meeting an uplink high rate requirement, how to improve flexibility of transmission scheduling performed on the terminal device and further reduce the implementation costs and the power consumption of the terminal device is an urgent problem to be resolved.

Therefore, embodiments of this application provide several communication methods. The communication methods are described by using an example in which execution bodies are a network apparatus and a terminal apparatus. The network apparatus in embodiments of this application may be a network device, or a chip, a unit, or a module in the network device. For example, the network apparatus may be the access network device 110a or the access network device 110b in FIG. 1. Alternatively, the network apparatus may be a communication apparatus having a function of a network device, or a chip, a unit, or a module inside the communication apparatus having the function of the network device. The terminal apparatus in embodiments of this application may be a terminal, or a chip, a unit, or a module in the terminal, for example, may be any terminal 120 shown in FIG. 1. Alternatively, the terminal apparatus may be a communication apparatus having a function of a terminal, or a chip, a unit, or a module inside the communication apparatus having the function of the terminal. For ease of understanding, in embodiments of this application, an example in which the terminal apparatus is a terminal device or a chip, a unit, or a module inside the terminal device, and the network apparatus is a network device or a chip, a unit, or a module inside the network device is used for description.

To make the objectives, technical solutions, and advantages of this application clearer, the following further describes this application in detail with reference to the accompanying drawings. A specific operation method in a method embodiment may also be applied to an apparatus embodiment or a system embodiment.

Based on the architecture of the network system shown in FIG. 1 and the content described in the foregoing related technologies, FIG. 5 is an example of a possible schematic flowchart of a communication method according to an embodiment of this application. A solution in FIG. 5 is described by using an example in which a network apparatus and a terminal apparatus interact with each other for execution. Specifically, the procedure is described by using an example in which the network apparatus is a network device and the terminal apparatus is a terminal. For related descriptions of the network apparatus and the terminal apparatus, refer to the foregoing content. Details are not described again.

In the method, the terminal device reports a downlink transmission capability of the terminal device to the network device by using a downlink band group. One band combination may include a plurality of downlink band groups, and a downlink transmission capability corresponding to (or indicated by) each downlink band group is a subset of a transmission capability corresponding to the band combination. As shown in FIG. 5, the method includes the following steps.

Step 501: The network device sends first information to the terminal device, where the first information is used to query for capability information of the terminal device.

In a possible implementation, after the terminal device initially establishes an RRC connection to the network device and registers with the network device, the network device sends the first information to the terminal device. In another possible implementation, after the terminal device establishes an RRC connection to the network device, if the network device has no available capability information of the terminal device, the network device sends the first information to the terminal device. In still another possible implementation, when capability information of the terminal device changes, the terminal device sends, to the network device, a mobility registration update request indicating a capability update, and the network device sends the first information to the terminal device after receiving the request message. It should be understood that a sending occasion or a sending cause of the first information is not limited in this embodiment of this application.

Step 502: The terminal device sends the capability information of the terminal device to the network device based on the first information.

In this embodiment of this application, the capability information of the terminal device may indicate a wireless access capability of the terminal device. Based on terminal capability levels shown in FIG. 3, the capability information of the terminal device may indicate one or more band combinations supported by the terminal device. For example, the one or more band combinations are represented by using a band combination list (supportedBandCombinationList) supported by the terminal device. One band combination may include one or more bands. For example, the one or more band combinations include a first band combination. The first band combination includes M bands (M is a positive integer), the capability information of the terminal device includes second information, the second information indicates N (N is a positive integer) downlink band groups (which may also be referred to as DL band groups) in the first band combination, and each of the N downlink band groups includes at least one of the M bands included in the first band combination. It may be understood that if the capability information of the terminal device indicates a plurality of (two or more) band combinations supported by the terminal device, each band combination in the capability information of the terminal device may include second information corresponding to the corresponding band combination, and the second information may indicate one or more downlink band groups in the corresponding band combination.

Each of the N downlink band groups includes a band in which the terminal device can simultaneously receive downlink signals. A first downlink band group is used as an example. For a band included in the first downlink band group, the terminal device may simultaneously receive downlink signals on carriers of the downlink band group. The downlink signal may specifically include at least one of downlink data, downlink signaling, system information, a paging message, and a downlink reference signal. Optionally, the downlink reference signal may include a downlink synchronization signal, a synchronization signal and physical broadcast channel (physical broadcast channel, PBCH) block (synchronization signal and PBCH block, SSB), a channel state information reference signal (channel state information reference signal, CSI-RS), and the like. This is not limited in this embodiment of this application.

It may be understood that, for each of the N downlink band groups included in the first band combination, a band included in the downlink band group is a subset of the M bands included in the first band combination. For example, the first downlink band group in the N downlink band groups includes m bands in the M bands, where m is a positive integer, and m is less than or equal to M. A band combination BC 1 in the capability information reported by the terminal device is used as an example. The BC 1 includes three bands (a band A, a band B, and a band C), and the BC 1 may include three downlink band groups: a downlink band group 1, a downlink band group 2, and a downlink band group 3. The downlink band group 1 includes the band A, the downlink band group 2 includes the band B and the band C, and the downlink band group 3 includes the band A and the band B. It may be understood that, for each of the N downlink band groups included in the first band combination, a component carrier in the band included in the downlink band group is a subset of component carriers in the M bands included in the first band combination. A band combination BC 1 in the capability information reported by the terminal device is used as an example. The BC 1 includes a band A, a band B, and a band C, and the terminal device supports two component carriers (a CC 1 and a CC 2) in the band A, two component carriers (a CC 3 and a CC 4) in the band B, and one component carrier CC 5 in the band C. A downlink band group included in the BC 1 includes the band A, the band B, and the band C, and in the downlink band group, the terminal device supports the CC 1 in the band A, the CC 3 and the CC 4 in the band B, and the CC 5 in the band C.

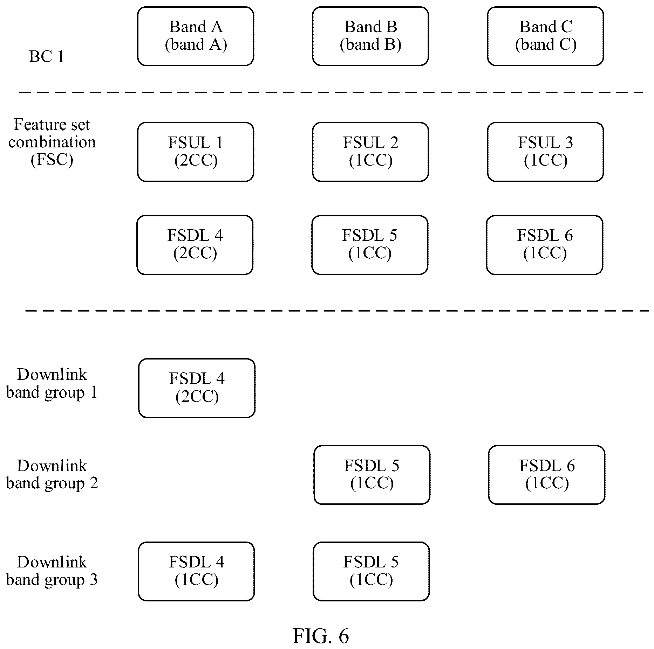

In a possible implementation, N downlink band groups included in one band combination may correspond to a same row (or a same group) of feature sets (FS) in a capability signaling structure reported by the terminal device, and a band feature set in each downlink band group is a part of a same row (or a same group) of band feature sets in the band combination. FIG. 6 shows an example of reporting, by the terminal device, a plurality of downlink band groups by using one row of downlink feature sets according to an embodiment of this application. As shown in FIG. 6, a band combination BC 1 includes a band A, a band B, and a band C, and an FSC associated with the BC 1 includes an uplink feature set (FSUL) and a downlink feature set (FSDL) that correspond to each band. The uplink feature set (FSUL) indicates an uplink transmission capability that can be supported by the terminal device, and may be carried in an FSUplink information element in the capability information of the terminal device. The downlink feature set (FSDL) indicates a downlink transmission capability that can be supported by the terminal device, and may be carried in an FSDownlink information element in the capability information of the terminal device. As shown in FIG. 6, the terminal device supports two component carriers (represented as 2CC in the figure) in the band A, one component carrier (represented as 1CC in the figure) in the band B, and one component carrier (represented as 1CC in the figure) in the band C in both uplink transmission and downlink transmission. The carrier combination BC 1 includes three downlink band groups: a downlink band group 1, a downlink band group 2, and a downlink band group 3. Each downlink band group corresponds to a part of the row of downlink feature sets. A downlink band capability of the downlink band group 1 is an FSDL 4 of the band A (FSDL 4 indicates FSDL ID=4, and the following descriptions are similar), indicating that a terminal capability corresponding to the downlink band group 1 is that the terminal device supports simultaneous receiving of downlink signals on two component carriers of the band A. A downlink band capability of the downlink band group 2 is an FSDL 5 of the band B and an FSDL 6 of the band C, indicating that a terminal capability corresponding to the downlink band group 2 is that the terminal device supports simultaneous receiving of downlink signals on one component carrier of the band B and one component carrier of the band C. A downlink band capability of the downlink band group 3 is the FSDL 4 of the band A and the FSDL 6 of the band B, indicating that a terminal capability corresponding to the downlink band group 3 is that the terminal device supports simultaneous receiving of downlink signals on one component carrier of the band A and one component carrier of the band B. In this way, the terminal device may report a row of FS capabilities (the row of FS capabilities corresponds to FSDLs of all bands in the BC 1), so that an FSDL of each downlink band group included in the BC 1 is an FSDL of a part of bands in the row of FS capabilities. Based on this, the network device may dynamically schedule the terminal device to perform downlink transmission based on an FSDL capability of the part of bands in the row of FS capabilities without performing RRC reconfiguration, so that in an aspect, signaling overheads for capability reporting of the terminal device are saved, and in another aspect, flexibility of switching between different downlink transmission manners in a network is improved, and a delay of switching between different downlink band groups is reduced.

The FSUL 1, the FSUL 2, the FSUL 3, the FSDL 4, the FSDL 5, and the FSDL 6 in FIG. 6 are merely examples for description, and do not represent a particular sequence. For example, for the band A, FSUL ID=1 and FSDL ID=5; for the band B, FSUL ID=3 and FSDL ID=2; and for the band B, FSUL ID=1 and FSDL ID=1.

It may be understood that each downlink band group corresponds to one receive mode, and different downlink band groups correspond to different receive modes. The downlink band groups in FIG. 6 are used as an example. Three receive modes corresponding to the three downlink band groups may be shown in Table 4.

**Table 4: Receive modes corresponding to downlink band groups**

| | Band A | Band B | Band C |
|---|---|---|---|
| Receive mode 1 | 2CC | | |
| Receive mode 2 | | 1CC | 1CC |
| Receive mode 3 | 1CC | 1CC | |

As shown in Table 4, a receive mode 1 corresponding to the downlink band group 1 is: simultaneously receiving downlink signals on two component carriers of the band A; a receive mode 2 corresponding to the downlink band group 2 is: simultaneously receiving downlink signals on one component carrier of the band B and one component carrier of the band C; and a receive mode 3 corresponding to the downlink band group 3 is: simultaneously receiving downlink signals on one component carrier of the band A and one component carrier of the band B.

It may be understood that one receive mode corresponds to a capability of one downlink band group. For example, the three receive modes in Table 4 respectively correspond to capabilities of the three downlink band groups. One receive mode may alternatively correspond to a subset of a capability of one downlink band group. For example, the receive mode corresponding to the downlink band group 1 may alternatively be: receiving a downlink signal on one component carrier in the band A.

In a possible implementation, the second information may be a downlink band group list corresponding to the first band combination, and the downlink band group list includes the N downlink band groups. In the list, in correspondence to each downlink band group, an identifier of the band included in the downlink band group may be indicated or included. For example, the identifier of the band may be a frequency value, an index value of a frequency, an index value of the band, or a sequence number of the band in the first band combination. For example, the first band combination BC 1 includes a band A, a band B, and a band C. In the downlink band group list corresponding to the first band combination, a downlink band group 1 may include a sequence number 1 of the band A in the BC 1 and a sequence number 2 of the band B in the BC 1, indicating that the downlink band group 1 includes the band A and the band B. Optionally, the band included in each downlink band group may be understood as a band entry (band entry), and the identifier of the band may be an index value of the band entry, for example, a sequence number of the band entry in the first band combination. There is a one-to-one correspondence between a sequence number of a band entry and a location of the band entry included in the first band combination. Band entries with different sequence numbers may correspond to a same band. For example, a band entry with a sequence number 1 and a band entry with a sequence number 2 correspond to non-contiguous (non-contiguous) carriers in the band A. Carriers corresponding to the band entry with the sequence number 1 are carriers that support contiguous (contiguous) carrier aggregation in the band A. Similarly, carriers corresponding to the band entry with the sequence number 2 are also carriers that support contiguous (contiguous) carrier aggregation in the band A. In other words, carriers that can be used for carrier aggregation in a band may be classified based on whether the carriers are contiguous by using band entries with different sequence numbers. For example, the first band combination sequentially includes three band entries whose sequence numbers are 1, 2, and 3. Band entries whose sequence numbers are 1 and 2 each correspond to a segment of contiguous (non-contiguous) carriers in the band A, but carriers corresponding to the band entry whose sequence number is 1 are not contiguous with carriers corresponding to the band entry whose sequence number is 2, and the band entry whose sequence number is 3 corresponds to carriers that support contiguous (contiguous) carrier aggregation in the band B.

In a possible implementation, the second information may be located in a per BC capability field in the capability information of the terminal device. For example, a downlink band group list may be added to the per BC capability field of the first band combination, where the downlink band group list includes an entry corresponding to each downlink band group, and an entry corresponding to one downlink band group includes an index value of a band (or a band entry) included in the band group.

In a possible implementation, in the capability information of the terminal device, for each band in all or some bands in a band combination, a maximum quantity of component carriers for carrier aggregation that are supported by the band may be further indicated. The first band combination is used as an example. The first band combination includes a first band, the capability information of the terminal device may include third information, the third information indicates a first quantity of carriers supported by the first band for receiving downlink signals, and the first quantity is a maximum quantity of carriers on which the terminal device can simultaneously receive downlink signals in the first band. Optionally, the first quantity is less than or equal to a second quantity of carriers for receiving downlink signals in the first band. For example, the first band combination includes a band A, a band B, and a band C, the first band combination includes a first downlink band group and a second downlink band group, the first downlink band group includes the band A and the band B, the second downlink band group includes only the band A, and the capability information of the terminal device indicates that a second quantity corresponding to the band A is equal to 2, and indicates that a first quantity corresponding to the band A is equal to 1. The capability information indicates:
(1) The terminal device supports receiving of downlink signals on two (that is, the second quantity) carriers in the band A. However, when downlink transmission is performed based on the first downlink band group in a carrier aggregation or dual connectivity scenario, the terminal device supports only carrier aggregation of a maximum of one carrier (that is, the first quantity of carriers indicated by the third information) in the band A and a carrier in the band B, so that downlink transmission of the terminal device does not exceed a capability of the terminal device in the carrier aggregation scenario.
(2) When downlink transmission is performed based on the second downlink band group, the terminal device supports receiving of downlink signals on a maximum of two (that is, the second quantity) carriers in the band A.

Optionally, in the capability information of the terminal device, there is no corresponding third information for some bands in the first downlink band group. In other words, the third information is not set or the third information is the default. In this case, it indicates that for each of these bands, a first quantity and a second quantity that correspond to the band are equal. The first band combination includes a band A, a band B, and a band C, the first band combination includes a first downlink band group, the first downlink band group includes the band A and the band B, the capability information of the terminal device indicates that a second quantity corresponding to the band B is equal to 2, and third information corresponding to the band B is the default. The capability information indicates that the terminal device supports receiving of downlink signals on two (that is, the second quantity) carriers in the band B, and when downlink transmission is performed based on the first downlink band group in a carrier aggregation or dual connectivity scenario, the terminal device supports carrier aggregation of a maximum of two carriers in the band A and a carrier in the band B.

In this embodiment of this application, optionally, the third information may be set in a field related to a band combination capability in the capability information of the terminal device. For example, the first band combination includes a band A, a band B, and a band C, the first band combination includes a first downlink band group and a second downlink band group, the first downlink band group includes the band A and the band B, and the second downlink band group includes the band A and the band C. A location of third information corresponding to the band A may include the following two cases:
Case 1: The third information corresponding to the band A is set in a per BC field corresponding to the first band combination. For example, a list is newly added to the per BC field corresponding to the first band combination, and the list includes third information respectively corresponding to the band A and another band (including, for example, the band B and/or the band C, if third information corresponding to the band B and/or the band C is not the default) in the first band combination. In this case, for the band A in the first downlink band group and the second downlink band group, values of the third information corresponding to the band A are the same.
Case 2: The third information corresponding to the band A is separately set in related fields of the first downlink band group and the second downlink band group. For example, a per BC field corresponding to the first band combination includes a downlink band group list, the downlink band group list includes an entry corresponding to the first downlink band group and an entry corresponding to the second downlink band group, the entry corresponding to the first downlink band group includes an index value of the band A and third information corresponding to the band A, and the entry corresponding to the second downlink band group includes the index value of the band A and third information corresponding to the band A. In this case, for the band A in the first downlink band group and the second downlink band group, values of the third information corresponding to the band A may be the same or may be different.

Locations of the third information in the capability information of the terminal device are merely two examples. The location of the third information in the capability information is not limited in this embodiment of this application.

In the foregoing capability reporting manner of the terminal device provided in this embodiment of this application, bands supported by downlink transmission and uplink transmission may be different (for example, feature sets corresponding to the bands are different). For each band, quantities of component carriers supported in a downlink direction and an uplink direction may also be different (for example, FSPCs included in each feature set FS are different), and the terminal device may separately report an uplink transmission capability and a downlink transmission capability.

For the uplink transmission capability, in a possible implementation, the capability information of the terminal device further indicates an uplink transmission capability corresponding to the first band combination, and the uplink transmission capability includes one of a first uplink transmission capability and a second uplink transmission capability. In other words, the capability information of the terminal device may further indicate whether the terminal device supports the first uplink transmission capability or the second uplink transmission capability, so that when performing uplink transmission scheduling on the terminal device, the network device uses a corresponding scheduling manner based on the uplink transmission capability supported by the terminal device. The first uplink transmission capability indicates that the terminal device can send an uplink signal in different bands of the first band combination in an uplink transmit channel switching (or referred to as uplink antenna switching or UL Tx switching) manner. The second uplink transmission capability indicates that the terminal device can simultaneously send uplink signals in a band of the first band combination.

Optionally, a method for indicating the uplink transmission capability is as follows: Indication information of the uplink transmission capability may be added to the per BC field in the capability information of the terminal device, and the indication information may indicate the uplink transmission capability corresponding to the band combination. For example, the indication information may be added to the per BC field, and if a value of the indication information is equal to a first value (for example, 0), it indicates that the uplink transmission capability corresponding to the band combination is the first uplink transmission capability; or if the value of the indication information is equal to a second value (for example, 1), it indicates that the uplink transmission capability corresponding to the band combination is the second uplink transmission capability. The reverse also applies. For another example, if the per BC field includes capability information indicating the first uplink transmission capability, it indicates that the uplink transmission capability corresponding to the band combination is the first uplink transmission capability; or if the per BC field does not include the capability information, it indicates that the uplink transmission capability corresponding to the band combination is the second uplink transmission capability. The reverse also applies. For example, the capability information of the first uplink transmission capability may include a band pair (band pair) supported by the terminal device for dynamic uplink antenna switching.

Optionally, another method for indicating the uplink transmission capability is as follows: If the uplink transmission capability corresponding to the first band combination is the first uplink transmission capability, a separate band combination list is used for the first band combination, to indicate that an uplink transmission capability corresponding to each band combination (including the first band combination) in the band combination list is the first uplink transmission capability. This can ensure backward compatibility.

It may be understood that the capability information of the terminal device may further include other information, or may further indicate another capability. This is not limited in this embodiment of this application. For example, the capability information of the terminal device may further include a measurement capability, a mobility capability, a MAC capability, an RLC capability, a PDCP capability, and the like of the terminal device.

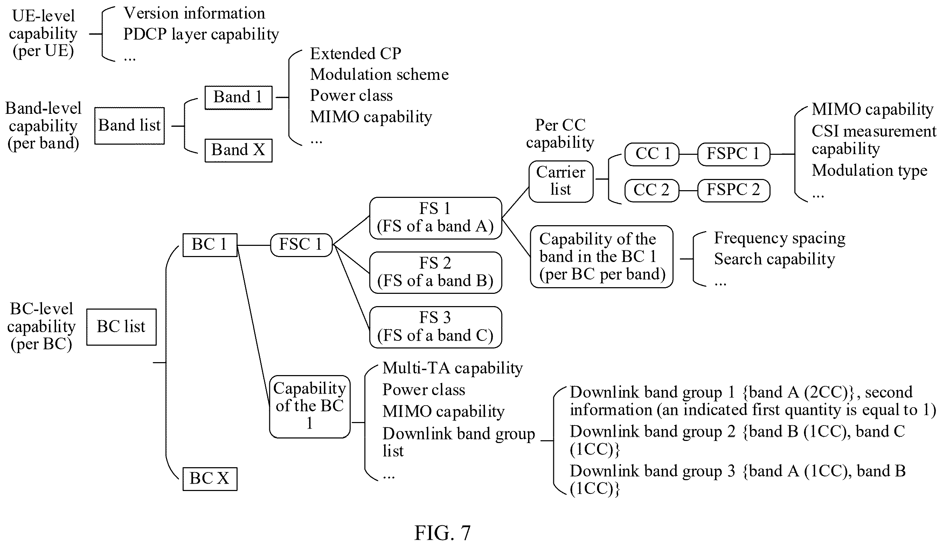

An example of an interaction process shown in FIG. 5 may be shown in FIG. 2. In step 501, the network device queries the terminal device for a terminal capability (UECapabilityEnquiry). Correspondingly, in step 502, the terminal device sends the capability information (UECapabilityInformation) of the terminal device to the network device. With reference to the downlink band groups shown in FIG. 6, a data structure of the capability information of the terminal device may be shown in FIG. 7. With reference to FIG. 7, in this embodiment of this application, a downlink band group list may be added to a per BC capability field corresponding to the first band combination (a BC 1 shown in FIG. 7). The downlink band group list includes three downlink band groups (a downlink band group 1, a downlink band group 2, and a downlink band group 3). The downlink band group 1 includes a band A, and the terminal device supports simultaneous receiving of downlink signals on 2CC (that is, two component carriers) in the band A. The downlink band group 2 includes a band B and a band C, and the terminal device supports simultaneous receiving of downlink signals on 1CC (that is, one component carrier) in the band B and 1CC in the band C. The downlink band group 3 includes the band A and the band B, and the terminal device supports simultaneous receiving of downlink signals on 1CC (that is, one component carrier) in the band A and 1CC in the band B.

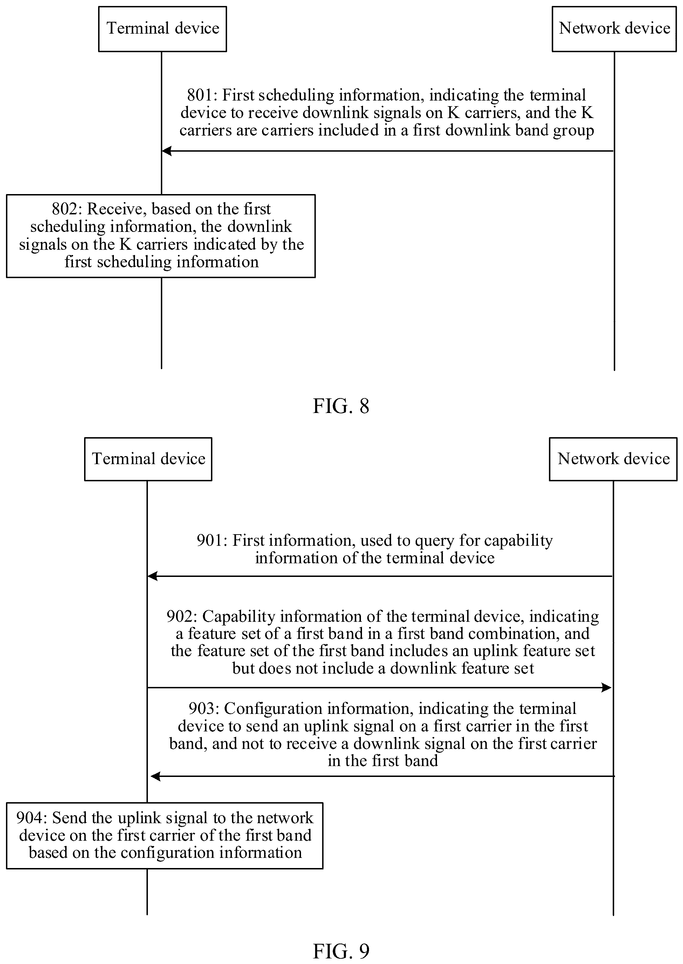

Based on the capability information of the terminal device that is sent by the terminal device, the network device may configure or schedule downlink transmission and/or uplink transmission of the terminal device. When scheduling downlink transmission of the terminal device, the network device may indicate, based on one downlink band group reported by the terminal device, the terminal device to receive a downlink signal in a receive mode corresponding to the downlink band group, so that the terminal device can be controlled to switch between receive modes corresponding to different downlink band groups. For an example in which the network device schedules the terminal device to perform downlink transmission, refer to a procedure shown in FIG. 8.

According to the procedure shown in FIG. 5, when reporting the capability information of the terminal device, the terminal device reports one or more downlink band groups included in the first band combination, so that the network device can control, based on the downlink band group reported by the terminal device, the terminal device to dynamically switch between receive modes corresponding to different downlink band groups, thereby improving flexibility of transmission scheduling.

Because a quantity of bands included in the first downlink band group may be less than a quantity of bands included in the first band combination, in other words, a quantity of carriers supported by the terminal device for simultaneously receiving downlink signals is less than a quantity of carriers supported by the terminal device for sending uplink signals, uplink carrier aggregation no longer depends on downlink carrier aggregation. Therefore, flexibility of transmission scheduling can be improved, a scenario requirement that a rate of an uplink service needs to be higher than that of a downlink service can be met, and a downlink transmission capability of the terminal device and implementation costs and power consumption of the terminal device can be reduced while an uplink high rate requirement is met.

When the quantity of bands included in the first downlink band combination is equal to the quantity of bands included in the first band combination, a quantity of carriers in at least one band in the first downlink band combination is less than a carrier capability (including, for example, a quantity of carriers) corresponding to the band in the first band combination, so that a quantity of carriers supported by the terminal device for simultaneously receiving downlink signals is less than a quantity of carriers supported by the terminal device for sending uplink signals. Therefore, the foregoing effect can also be implemented.

After receiving the capability information of the terminal device that is sent by the terminal device, the network device may schedule, based on the capability of the terminal device, the terminal device to perform downlink transmission and/or uplink transmission.

FIG. 8 is a schematic flowchart of scheduling a terminal device to perform downlink transmission according to an embodiment of this application. A solution in FIG. 8 is described by using an example in which a network apparatus and a terminal apparatus interact with each other for execution. A procedure shown in FIG. 8 is described by using an example in which the network apparatus is a network device and the terminal apparatus is a terminal. For related descriptions of the network apparatus and the terminal apparatus, refer to the foregoing content. Details are not described again.

Scheduling information in FIG. 8 is scheduling information for downlink transmission. To distinguish the scheduling information for downlink transmission from scheduling information for uplink transmission, in this embodiment of this application, scheduling information used for downlink transmission scheduling is referred to as first scheduling information, and scheduling information used for uplink transmission scheduling is referred to as second scheduling information.

As shown in FIG. 8, the method includes the following steps.

Step 801: The network device sends the first scheduling information to the terminal device based on capability information of the terminal device. The first scheduling information indicates the terminal device to receive downlink signals on K (K is a positive integer) carriers, and the K carriers are carriers included in a first downlink band group. The first downlink band group is one of N downlink band groups included in a first band combination.

For related descriptions of the capability information of the terminal device, refer to the foregoing embodiment. Details are not described again.

The network device may determine the K carriers based on the first downlink band group reported by the terminal device, where the K carriers are all or some carriers included in the first band group. In other words, K is less than or equal to a quantity of carriers included in the first downlink band group, or a quantity of carriers scheduled by the network device for receiving downlink signals does not exceed a quantity of carriers included in one downlink band group.

In a possible implementation, third information is further set for a first band in the capability information of the terminal device. In this case, the network device may determine, based on a first quantity indicated by the third information corresponding to the first band, K1 (K1 is a positive integer) carriers for receiving downlink signals in the first band. K1 is less than or equal to the first quantity, and K1 is less than K. In other words, the K carriers include the K1 carriers for receiving downlink signals in the first band.

Based on the foregoing implementation, in a carrier aggregation scenario, the network device may schedule, based on a quantity (indicated by third information corresponding to a band) of carriers that can be supported by the terminal device in the band and that are for simultaneously receiving downlink signals, a carrier used for downlink transmission in the band, where a quantity of carriers scheduled in the band for downlink transmission does not exceed the quantity of carriers that is indicated by the third information corresponding to the band. In addition, a quantity of carriers that is indicated by second indication information corresponding to the band does not exceed a quantity of carriers supported by the terminal device in the band, so that it can be ensured that downlink transmission scheduling performed by the network device on the terminal device does not exceed a downlink transmission capability of the terminal device. For example, in the first downlink band group, if the terminal device supports two component carriers in the first band, and the quantity of carries that is indicated by the third information corresponding to the first band is 1, the network device can schedule only one component carrier for the terminal device in the first band, so that the terminal device may simultaneously receive downlink signals on the component carrier and a component carrier in another band. For another example, in the first downlink band group, if the terminal device supports two component carriers in the first band, and the quantity of carries that is indicated by the third information corresponding to the first band is 2, the network device may schedule one or two component carriers for the terminal device in the first band for downlink transmission.

In a possible implementation, when the network device schedules the terminal device to switch between different receive modes, the network device always keeps performing downlink transmission on a carrier corresponding to a primary cell (PCell). In other words, each receive mode scheduled by the network device always includes transmission of a downlink signal of the primary cell.

In a possible implementation, the first scheduling information sent by the network device is underlying signaling. For example, the underlying signaling may be downlink control information (downlink control information, DCI), a MAC control element (MAC control element, MAC CE), or other underlying signaling. In other words, the network device may dynamically control, by using the underlying signaling, the terminal device to switch between receive modes corresponding to different downlink band groups without performing RRC reconfiguration, so that service interruption can be reduced, and user experience can be improved.

Step 802: The terminal device receives, based on the first scheduling information, downlink signals on the K carriers indicated by the first scheduling information.

Optionally, that the network device schedules the terminal device to perform downlink transmission in downlink receiving manners corresponding to a plurality of downlink band groups included in the first band combination is used as an example, and when the terminal device switches, based on the first scheduling information, between receive modes corresponding to different downlink band groups, there may be the following two cases:
Case 1: The terminal device has sufficient radio frequency resources (for example, radio frequency chains, or referred to as RF chains) to support transmission in all bands in the first band combination. However, because downlink baseband processing resources are limited, downlink signals in all bands in one downlink band group cannot be simultaneously received. Therefore, during switching between different receive modes corresponding to different downlink band groups, the RF chain does not need to be switched, and no interruption time is caused during switching between the receive modes.
Case 2: The terminal device does not have sufficient radio frequency resources to support transmission in all bands in the first band combination. Therefore, during switching between different receive modes corresponding to different downlink band groups, an RF chain needs to be switched, and interruption is caused during switching between the receive modes.

Optionally, in the case 2, the terminal device may further report capability information (for example, a switching time length) of switching time supported by the terminal device during switching between the different downlink band groups. In the switching time, the network device does not send a downlink signal, and the terminal device may not receive a downlink signal.

In a possible implementation, before step 801, the network device may further send configuration information to the terminal device based on the capability information of the terminal device. The configuration information may indicate the first band combination supported by the terminal device, so that the network device may configure a carrier for the terminal device based on a maximum capability reported by the terminal device. For example, the network device may configure a carrier for the terminal device based on a capability corresponding to a feature set (FS) reported by the terminal device. For example, the configuration information may be an RRC reconfiguration message, and the RRC reconfiguration message includes a configuration parameter of the carrier. Because the first band combination may include the N downlink band groups, when subsequently scheduling the terminal device based on one of the N downlink band groups, the network device may indicate the downlink band group by using the first scheduling information, so that the terminal device may determine, based on the configuration information, a receive mode corresponding to the downlink band group, and receive a downlink signal based on the receive mode.

For example, the network device may send the configuration information by using RRC signaling.

A capability of the terminal device shown in FIG. 6 is used as an example. For a band combination BC 1, the network device may configure a maximum of four carriers in a band A, a band B, and a band C for the terminal device by using RRC signaling based on a row of downlink feature sets (FSDL). Then, the network device may schedule, based on a downlink band group by using DCI, the terminal device to perform downlink transmission in a corresponding receive mode, for example, schedule the terminal device to simultaneously receive downlink signals on a maximum of two carriers in the four carriers. Receive modes shown in Table 4 is used as an example. At a moment 1, the network device schedules, by using DCI 1 and DCI 2, the terminal device to perform downlink transmission according to a receive mode 1 corresponding to a downlink band group 1, that is, schedules the terminal device to receive downlink signals on two component carriers in a band A. Then, at a moment 2, the network device schedules, by using DCI 3 and DCI 4, the terminal device to perform downlink transmission according to a receive mode 2 corresponding to a downlink band group 2, that is, schedules the terminal device to receive downlink signals on one component carrier in the band A and one component carrier in a band B. Correspondingly, at the moment 2, the terminal device receives the downlink signals in the band A and the band B by using corresponding radio frequency links.

It should be understood that a quantity of carriers configured by the network device for downlink transmission may also be less than 4. In other words, a quantity of carriers configured for the terminal device for downlink transmission does not exceed a capability reported by the terminal device, and may specifically depend on network implementation. For example, the network device may determine, based on a requirement on a peak service rate, a data traffic volume, signal quality of a carrier, and the like, a quantity of secondary carriers configured for the terminal device.

According to the procedure shown in FIG. 8, for the first band combination supported by the terminal device, switching between receive modes corresponding to the plurality of downlink band groups is implemented through dynamic scheduling based on the N downlink band groups included in the first band combination, and switching between the receive modes corresponding to the plurality of downlink band groups does not need to be performed through reconfiguration, so that a delay caused by RRC reconfiguration can be avoided.

In this embodiment of this application, the network device may further schedule uplink transmission of the terminal device based on the capability information reported by the terminal device.

In a possible implementation, if the capability information of the terminal device indicates that the terminal device supports a first uplink transmission capability, the network device may control, in the foregoing transmit channel switching (Tx switching) manner, the terminal device to switch between different transmit modes. For example, a capability 1 and a capability 2 that are reported by the terminal device are shown in Table 2. The terminal device further indicates that the terminal device cannot perform 2+2 MIMO transmission (that is, cannot simultaneously perform sending on two carriers through two-layer MIMO). Based on the capability 1 reported by the terminal device, the network device may configure a maximum of two carriers (for example, a CC 1+a CC 2) for the terminal device, and control, based on scheduling information, the terminal device to switch between several transmit modes shown in Table 3. It may be understood that, sending an uplink signal through transmit channel switching may include switching an uplink transmit channel between carriers of one band, two bands, or more than two bands; and transmit channel switching may include radio frequency channel switching of 1Tx-1Tx, 1Tx-2Tx, or 2Tx-2Tx, or switching involving more than 2Tx.

In a possible implementation, if the capability information of the terminal device indicates that the terminal device supports a second uplink transmission capability, the network device may determine P (P is a positive integer) carriers based on a carrier that is included in the first band combination and that is for sending an uplink signal, and send second scheduling information to the terminal device. The second scheduling indicates the terminal device to send uplink signals on the P carriers by using a maximum MIMO capability (for example, a maximum quantity of MIMO layers) of the P carriers. The terminal device may send the uplink signals to the network device on the P carriers based on the second scheduling information. Correspondingly, the network device receives, on the P carriers, the uplink signals sent by the terminal device. For example, a capability 1 and a capability 2 that are reported by the terminal device are shown in Table 2. Based on the capability 1 reported by the terminal device, the network device may configure a maximum of two carriers (for example, a CC 1 in a band A and a CC 2 in a band B) for the terminal device, where a maximum quantity of MIMO layers of each carrier is 2, and control, by using scheduling information, the terminal device to send uplink signals on the two carriers, to be specific, send uplink signals on the CC 1 in the band A through two-layer MIMO, and send uplink signals on the CC 2 in the band B through two-layer MIMO. In other words, if the terminal device supports the second uplink transmission capability, when performing uplink transmission scheduling on the terminal device, the network device may indicate, based on a MIMO capability (for example, a quantity of MIMO layers) of a component carrier that is indicated in the capability information reported by the terminal device, the terminal device to perform uplink transmission based on the MIMO capability reported by the terminal device. That is, quantities of bands and carriers simultaneously scheduled for uplink transmission and a quantity of MIMO layers scheduled for the carrier are not limited by a transmit channel.

According to the uplink transmission scheduling method provided in this embodiment of this application, the terminal device may report, based on the capability of the terminal device, whether the terminal device supports the first uplink transmission capability or the second uplink transmission capability, so that the network device can perform corresponding scheduling based on the uplink transmission capability supported by the terminal device, to adapt to the capability of the terminal and improve uplink transmission efficiency.

Based on the architecture of the network system shown in FIG. 1 and the content described in the foregoing related technologies, FIG. 9 is an example of a possible schematic flowchart of another communication method according to an embodiment of this application. A solution in FIG. 9 is described by using an example in which a network apparatus and a terminal apparatus interact with each other for execution. Specifically, the procedure is described by using an example in which the network apparatus is a network device and the terminal apparatus is a terminal. For related descriptions of the network apparatus and the terminal apparatus, refer to the foregoing content. Details are not described again.

In the method, in capability information reported by the terminal device, for one band in one band combination, the terminal device may report that the terminal device has only an uplink transmission capability but does not have a downlink transmission capability. As shown in FIG. 9, the method includes the following steps.

Step 901: The network device sends first information to the terminal device, where the first information is used to query for the capability information of the terminal device.

In a possible implementation, after the terminal device initially establishes an RRC connection to the network device and registers with the network device, the network device sends the first information to the terminal device. In another possible implementation, after the terminal device establishes an RRC connection to the network device, if the network device has no available capability information of the terminal device, the network device sends the first information to the terminal device. In still another possible implementation, when capability information of the terminal device changes, the terminal device sends, to the network device, a mobility registration update request indicating a capability update, and the network device sends the first information to the terminal device after receiving the request message. It should be understood that a sending occasion or a sending cause of the first information is not limited in this embodiment of this application.

Step 902: The terminal device sends the capability information of the terminal device to the network device based on the first information, where the capability information of the terminal device indicates a feature set of a first band in a first band combination, and the feature set of the first band includes an uplink feature set but does not include a downlink feature set.

In other words, for a band in a band combination, the terminal device may support uplink transmission only on a component carrier of the band, and does not support uplink transmission on the component carrier of the band. In other words, for the component carrier in the band, the terminal device has only an uplink transmission capability, but does not have a downlink transmission capability. In this way, a quantity of carriers supported by the terminal device for downlink transmission is less than a quantity of carriers supported by the terminal device for uplink transmission. Therefore, uplink carrier aggregation no longer depends on downlink carrier aggregation, so that flexibility of transmission scheduling can be improved, a scenario requirement that a rate of an uplink service needs to be higher than that of a downlink service can be met, and power consumption of the terminal device can be further reduced.

In a possible implementation, in the capability information of the terminal device, if a value of an identifier of the uplink feature set of the first band in the first band combination is not 0, it indicates that the terminal device supports uplink transmission on a carrier of the first band, that is, the terminal device has an uplink transmission capability on the carrier of the first band. In addition, in the capability information of the terminal device, if a value of an identifier of the downlink feature set of the first band in the first band combination is equal to 0, it indicates that the terminal device does not support downlink transmission on the carrier of the first band, that is, the terminal device does not have a downlink transmission capability on the carrier of the first band.

In another possible implementation, in the capability information of the terminal device, if a value of an identifier of the uplink feature set of the first band in the first band combination points to (or corresponds to) at least one component carrier feature set, it indicates that the terminal device supports uplink transmission on at least one component carrier of the first band, that is, the terminal device has an uplink transmission capability on the carrier of the first band. In addition, in the capability information of the terminal device, if the downlink feature set of the first band in the first band combination does not include a component carrier feature set, it indicates that the terminal device does not support downlink transmission on the carrier of the first band, that is, the terminal device does not have a downlink transmission capability in the first band.

Optionally, the first band may also be replaced with a first band entry (band entry), and carriers included in the first band entry are contiguous (contiguous) carriers.

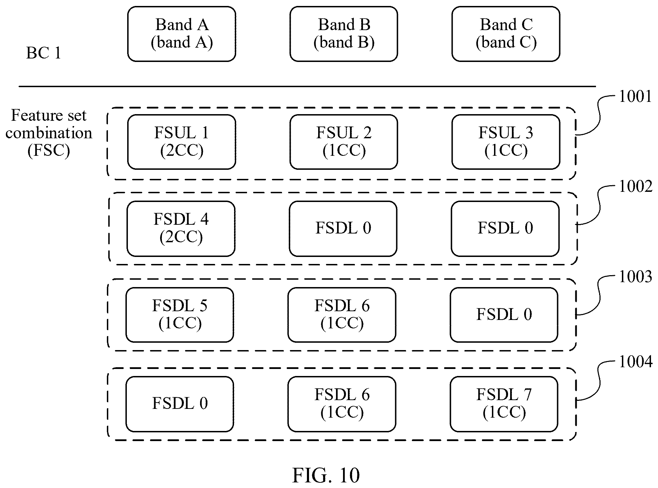

FIG. 10 is an example of a diagram of capability information reported by the terminal device according to an embodiment of this application. As shown in FIG. 10, a band combination BC 1 includes a band A, a band B, and a band C, and an FSC associated with the BC 1 includes an uplink feature set (FSUL) and downlink feature sets (FSDL) that correspond to each band. The uplink feature set (FSUL) indicates an uplink transmission capability that can be supported by the terminal device, and may be carried in a FeatureSetUplink information element in the capability information of the terminal device. The downlink feature set (FSDL) indicates a downlink transmission capability that can be supported by the terminal device, and may be carried in a FeatureSetDownlink information element in the capability information of the terminal device. Three rows of downlink feature sets in FIG. 10 each form a feature set (FS) capability with uplink feature sets shown in the first row, that is, there are three feature set capabilities in total. Specifically, the capability information shown in FIG. 10 includes three feature set capabilities (an FS capability 1, an FS capability 2, and an FS capability 3) corresponding to the band combination BC 1. The FS capability 1 includes uplink feature sets 1001 of the band A, the band B, and the band C and downlink feature sets 1002 of the three bands. The FS capability 2 includes the uplink feature sets 1001 of the band A, the band B, and the band C and downlink feature sets 1003 of the three bands. The FS capability 3 includes the uplink feature sets 1001 of the band A, the band B, and the band C and downlink feature sets 1004 of the three bands.

In the FS capability 1, "FSUL 2 (1CC)" corresponding to the band B indicates that an identifier (ID) of an uplink feature set of the band B is equal to 2, and the terminal device supports uplink transmission on one component carrier in the band B; and "FSDL 0" corresponding to the band B indicates that an identifier (ID) of a downlink feature set of the band B is equal to 0, and the terminal device does not support downlink transmission on a component carrier in the band B. In other words, in the FS capability 1, an uplink transmission capability is greater than a downlink transmission capability. Correspondingly, when the network device configures uplink transmission and downlink transmission of the terminal device, a quantity of carriers configured for the terminal device to perform uplink transmission is greater than a quantity of carriers configured for the terminal device to perform downlink transmission.

Identifier values of FSULs, identifier values of FSDLs, and identifier values of FSPCs shown in FIG. 10 are merely examples. This is not limited in this embodiment of this application. For example, identifiers (ID) of FSULs or FSDLs corresponding to the band A and the band B may be the same, or may be different.

In a possible implementation, configuration information of the network device for a first carrier includes an uplink BWP configuration, and does not include a downlink BWP configuration or a downlink initial BWP configuration (an initial BWP is also referred to as an initial BWP or a BWP #0).

In a possible implementation, the capability information of the terminal device may further indicate that the terminal device supports dynamic switching between the at least two groups of band feature sets of the first band combination. Correspondingly, the network device may indicate, in a dynamic scheduling manner, the terminal device to switch between transmission modes (including, for example, transmit modes and/or receive modes) corresponding to a plurality of FS capabilities. For example, the capability information of the terminal device may indicate, by indicating identifiers of a group of bands or identifiers of a group of feature sets corresponding to the bands, that the terminal device supports the foregoing capability. Correspondingly, the network device may indicate, in the dynamic scheduling manner, the terminal device to switch between transmit modes corresponding to different downlink feature sets. For example, the network device may schedule, by using DCI or a MAC CE, carriers on which the terminal device simultaneously receives downlink signals. In the foregoing manner, the network device does not need to perform RRC reconfiguration. This improves flexibility of switching between different downlink transmission manners in a network, and reduces a switching delay.

FIG. 10 is used as an example. The capability information of the terminal device indicates dynamic switching between the downlink feature sets 1002 and the downlink feature sets 1003. At a moment 1, the network device schedules, by using DCI 1, the terminal device to perform downlink transmission according to a receive mode 1 corresponding to the downlink feature sets 1002, that is, schedules the terminal device to receive downlink signals on two component carriers in the band A. Then, at a moment 2, the network device schedules, by using DCI 2 and DCI 3, the terminal device to perform downlink transmission according to a receive mode 2 corresponding to the downlink feature sets 1003, that is, schedules the terminal device to receive downlink signals on one component carrier in the band A and one component carrier in the band B. Correspondingly, at the moment 2, the terminal device receives the downlink signals in the band A and the band B by using corresponding radio frequency links.

In a possible implementation, the network device may indicate, by using RRC reconfiguration signaling, the terminal device to switch between transmission modes (including, for example, transmit modes and/or receive modes) corresponding to a plurality of FS capabilities.

In a possible implementation, a data structure of the capability information sent by the terminal device may be shown in FIG. 3.

Further, the procedure shown in FIG. 9 may further include the following steps:
Step 903: The network device sends configuration information to the terminal device based on the feature set of the first band, where the configuration information indicates the terminal device to send an uplink signal on the first carrier of the first band, and not to receive a downlink signal on the first carrier of the first band.

Optionally, when scheduling the terminal device, the network device may schedule the terminal device to perform transmission through carrier aggregation. For example, the network device may indicate to perform carrier aggregation on the first carrier and a second carrier (the second carrier and the first carrier are carriers in the first band; or the second carrier is a carrier in a second band, and the second band and the first band are bands in the first band combination), and indicate to send an uplink signal but not receive a downlink signal on the first carrier. Optionally, the network device may indicate to send an uplink signal and receive a downlink signal on the second carrier, or indicate to send an uplink signal but not receive a downlink signal on the second carrier, or indicate to receive a downlink signal but not send an uplink signal on the second carrier.

Terminal capability information shown in FIG. 10 is used as an example. When configuring carrier aggregation or dual connectivity for the terminal device, the network device may configure a component carrier for the terminal device based on one of the FS capability 1, the FS capability 2, and the FS capability 3. If configuration is performed based on the FS capability 1, carriers configured for the terminal device for downlink transmission and uplink transmission include two component carriers in the band A, and the two component carriers may use a carrier aggregation manner. If configuration is performed based on the FS capability 2, carriers configured for the terminal device for downlink transmission include one component carrier in the band A and one component carrier in the band B, and the two component carriers may use a carrier aggregation manner; and carriers used for uplink transmission may include one component carrier in the band A and one component carrier in the band C, and the two component carriers may use a carrier aggregation manner. If configuration is performed based on the FS capability 3, carriers configured for the terminal device for downlink transmission include one component carrier in the band B and one component carrier in the band C, and carriers used for uplink transmission may include one carrier in the band A and one carrier in the band B. In other words, the carrier configured by the network device for the terminal device for downlink transmission corresponds to one of downlink transmission capabilities in the three FS capabilities. It should be understood that a quantity of carriers configured by the network device for the terminal device for downlink transmission may be less than or equal to a quantity of carriers corresponding to a downlink transmission capability in one FS capability. In other words, a downlink transmission capability configured by the network device for the terminal device does not exceed a downlink transmission capability in one FS capability.

Step 904: The terminal device sends the uplink signal to the network device on the first carrier of the first band based on the configuration information.

In a possible implementation, in a carrier aggregation scenario, the network device may indicate, by using the configuration information, the terminal device to switch between different multi-carrier aggregations in an uplink direction. Correspondingly, there may be the following two cases when the terminal device switches between different transmit modes:
Case 1: The terminal device has sufficient radio frequency resources (for example, radio frequency chains, or referred to as RF chains) to support transmission in all bands in the first band combination. However, because uplink baseband processing resources are limited, uplink signals in all the bands cannot be simultaneously received. Therefore, during switching between the different transmit modes, an RF chain does not need to be switched, and no interruption time is caused during switching between the transmit modes.
Case 2: The terminal device does not have sufficient radio frequency resources (for example, RF chains) to support transmission in all bands. Therefore, during switching between the different transmit modes, an RF chain needs to be switched, and interruption is caused during switching between the transmit modes.

Optionally, in the case 2, the terminal device may further report capability information (for example, a switching time length) of switching time supported by the terminal device during switching between the different transmit modes. In the switching time, the terminal device may not transmit an uplink signal.

In the procedure shown in FIG. 9, a quantity of carriers configured for uplink transmission may be greater than a quantity of carriers configured for downlink transmission, or a carrier (or a cell) may be allowed to be configured with no downlink BWP (for example, configured with no initial BWP), but the carrier (or the cell) has an uplink BWP configuration. According to the method, a quantity of carriers of a downlink configuration can be enabled to be less than a quantity of carriers of an uplink configuration, so that a downlink capability of the terminal device can be reduced while an uplink high rate requirement is ensured, and implementation costs of the terminal device can be reduced. The foregoing method does not make too many modifications to an existing protocol, so that implementation costs are low.

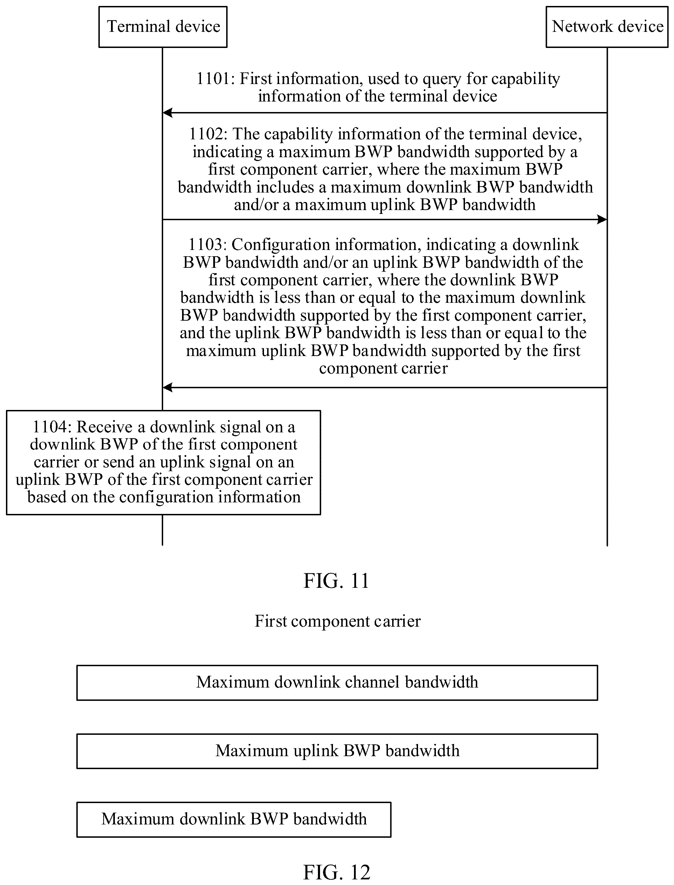

Based on the architecture of the network system shown in FIG. 1 and the content described in the foregoing related technologies, FIG. 11 is an example of a possible schematic flowchart of another communication method according to an embodiment of this application. A solution in FIG. 11 is described by using an example in which a network apparatus and a terminal apparatus interact with each other for execution. Specifically, the procedure is described by using an example in which the network apparatus is a network device and the terminal apparatus is a terminal. For related descriptions of the network apparatus and the terminal apparatus, refer to the foregoing content. Details are not described again.

In the method, in capability information reported by the terminal device, for a first component carrier, a downlink BWP bandwidth capability of the first component carrier may be less than an uplink BWP bandwidth capability of the first component carrier. As shown in FIG. 11, the method includes the following steps.

Step 1101: The network device sends first information to the terminal device, where the first information is used to query for the capability information of the terminal device.

In a possible implementation, after the terminal device initially establishes an RRC connection to the network device and registers with the network device, the network device sends the first information to the terminal device. In another possible implementation, after the terminal device establishes an RRC connection to the network device, if the network device has no available capability information of the terminal device, the network device sends the first information to the terminal device. In still another possible implementation, when capability information of the terminal device changes, the terminal device sends, to the network device, a mobility registration update request indicating a capability update, and the network device sends the first information to the terminal device after receiving the request message. It should be understood that a sending occasion or a sending cause of the first information is not limited in this embodiment of this application.

Step 1102: The terminal device sends the capability information of the terminal device to the network device based on the first information, where the capability information of the terminal device indicates a maximum BWP bandwidth supported by the first component carrier, and the maximum BWP bandwidth includes a maximum downlink BWP bandwidth and/or a maximum uplink BWP bandwidth. Optionally, the maximum downlink BWP bandwidth supported by the first component carrier is less than or equal to a maximum downlink channel bandwidth of the first component carrier. Optionally, the maximum uplink BWP bandwidth supported by the first component carrier is less than or equal to a maximum uplink channel bandwidth of the first component carrier.

Optionally, the first component carrier is a component carrier in a first band in a first band combination. Based on the foregoing implementation, for one or more component carriers supported in the first band, a maximum downlink BWP bandwidth and/or a maximum uplink BWP bandwidth that are/is supported by the component carrier may be reported. Optionally, based on the foregoing implementation, for each component carrier supported in each band in the first band combination, a maximum downlink BWP bandwidth and/or a maximum uplink BWP bandwidth that are/is supported by the component carrier may be reported.

In a possible implementation, the capability information of the terminal device includes the maximum downlink BWP bandwidth supported by the first component carrier and the maximum uplink BWP bandwidth supported by the first component carrier, and the maximum uplink BWP bandwidth supported by the first component carrier is equal to the maximum downlink channel bandwidth of the first component carrier. In this way, in the capability information of the terminal device, because the "maximum downlink BWP bandwidth" of the first component carrier is less than or equal to the "maximum downlink channel bandwidth" of the first component carrier, and the "maximum uplink BWP bandwidth" of the first component carrier is equal to the "maximum downlink channel bandwidth" of the first component carrier, the "maximum downlink BWP bandwidth" of the first component carrier is less than or equal to the "maximum uplink BWP bandwidth" of the first component carrier, so that decoupling between an uplink BWP bandwidth and a downlink BWP bandwidth can be implemented. FIG. 12 is an example of a diagram of the maximum downlink channel bandwidth, the maximum downlink BWP bandwidth, and the maximum downlink BWP bandwidth of the first component carrier according to an embodiment of this application. As shown in FIG. 12, in the capability information reported by the terminal device, for the first component carrier, the maximum downlink channel bandwidth of the first component carrier may be equal to a cell bandwidth, for example, may be 100 M; the maximum uplink BWP bandwidth of the first component carrier may be equal to the cell bandwidth, for example, may also be 100 B; and the maximum downlink BWP bandwidth of the first component carrier is less than the cell bandwidth, for example, may be 40 M.

In a possible implementation, in addition to the maximum downlink BWP bandwidth of the first component carrier, the capability information of the terminal device further includes the maximum downlink channel bandwidth of the first component carrier. In consideration of backward compatibility, for the first component carrier, the terminal device may report two different maximum downlink channel bandwidth capabilities, including, for example, a first maximum downlink channel bandwidth and a second maximum downlink channel bandwidth. The first maximum downlink channel bandwidth may be different from the second maximum downlink channel bandwidth. For example, the first maximum downlink channel bandwidth is less than the second maximum downlink channel bandwidth. The first maximum downlink channel bandwidth may be identified by an original network device. In this way, the original network device may configure a small downlink channel bandwidth for the terminal device based on the first maximum downlink channel bandwidth of the first component carrier as a carrier bandwidth of a cell, so that it can be ensured that the carrier bandwidth configured for the terminal does not exceed a capability of the terminal device. The first maximum downlink channel bandwidth may be a maximum downlink channel bandwidth capability defined in a related technology. Optionally, the first maximum downlink channel bandwidth is a channel bandwidth indicated by supportedBandwidthDL/supportedBandwidthDL-v1710. The second maximum downlink channel bandwidth is a newly added capability in this embodiment of this application, and the second maximum downlink channel bandwidth may be identified by an upgraded network device. The terminal device may further report a downlink BWP bandwidth capability of the first component carrier (for example, the maximum downlink BWP bandwidth of the first component carrier). The maximum downlink BWP bandwidth is less than the second maximum downlink channel bandwidth. Optionally, the maximum downlink BWP bandwidth may be greater than the first maximum downlink channel bandwidth. The original network device cannot identify the second maximum downlink channel bandwidth and the maximum downlink BWP bandwidth. Therefore, the terminal device reports the first maximum downlink channel bandwidth, so that it can be ensured that the original network device configures the carrier bandwidth of the cell based on a first maximum downlink channel bandwidth capability, to ensure that the carrier bandwidth does not exceed the capability of the terminal device.

In a possible implementation, in addition to the maximum uplink BWP bandwidth of the first component carrier, the capability information of the terminal device further includes the maximum uplink channel bandwidth of the first component carrier. The maximum uplink BWP bandwidth of the first component carrier is less than or equal to the maximum uplink channel bandwidth of the first component carrier.

In a possible implementation, in consideration of backward compatibility, to avoid a configuration error of the original network device, in this embodiment of this application, a small downlink carrier bandwidth value may be reported based on an existing maximum carrier bandwidth capability of a component carrier, for example, may be indicated by using a supportedBandwidth information element, so that the original network device can configure a small carrier bandwidth for the terminal device, to ensure that the carrier bandwidth configured for the terminal device does not exceed the capability of the terminal device.

In another possible implementation, the terminal device may use a new field to report a large carrier bandwidth capability (including, for example, a maximum downlink channel bandwidth of a carrier and/or a maximum uplink channel bandwidth of the carrier), and report a limited maximum BWP bandwidth capability (including, for example, a maximum downlink BWP bandwidth and/or a maximum uplink BWP bandwidth of the carrier), to allow the upgraded network device to dynamically schedule downlink transmission or uplink transmission of the terminal device when configuring a large cell bandwidth for the terminal device, so that a downlink BWP bandwidth or an uplink BWP bandwidth of the terminal device on the carrier does not exceed the limited maximum BWP bandwidth capability reported by the terminal device. For example, in the capability information reported by the terminal device, for the first component carrier, the terminal device reports a maximum downlink channel bandwidth of 100 M and a maximum downlink BWP bandwidth of 40 M in a newly added downlink capability field, so that when the network device configures a carrier bandwidth of 100 M for the terminal device based on the capability information, a configured downlink BWP bandwidth does not exceed 40 M, so that the terminal device is controlled to receive a downlink signal only on a downlink BWP whose bandwidth does not exceed 40 M. Optionally, in the capability information reported by the terminal device, for the first component carrier, the maximum uplink BWP bandwidth of the first component carrier is 100 M or less than 100 M, or the maximum uplink BWP bandwidth of the first component carrier is the default. When the maximum uplink BWP bandwidth of the first component carrier is the default, it indicates that an uplink BWP bandwidth that can be supported by the terminal device is less than the maximum uplink BWP bandwidth indicated in the newly added field. For example, the uplink BWP bandwidth that can be supported by the terminal device may be any bandwidth value less than the maximum uplink BWP bandwidth indicated in the newly added field.

In a possible implementation, the capability information of the terminal device includes a capability of the first component carrier, the capability of the first component carrier includes an uplink capability and a downlink capability, the uplink capability includes the maximum uplink BWP bandwidth supported by the first component carrier, and the downlink capability includes the maximum downlink BWP bandwidth supported by the first component carrier. Optionally, a data structure of the capability information of the terminal device may be shown in FIG. 3. A data structure of capability information shown in FIG. 3 is used as an example. An FSC 1 associated with a first band combination BC 1 includes an FS 1 corresponding to a first band, the FS 1 includes a carrier list, the carrier list includes a first component carrier CC 1, the CC 1 is associated with an FSPC 1, the FSPC 1 includes a field 1 corresponding to an uplink capability and a field 2 corresponding to a downlink capability, the field 1 may include a maximum uplink BWP bandwidth supported by the CC 1, and the field 2 may include a maximum downlink BWP bandwidth supported by the CC 1.

Further, the procedure shown in FIG. 11 may further include the following steps:
Step 1103: The network device sends configuration information to the terminal device, where the configuration information indicates a downlink BWP bandwidth and/or an uplink BWP bandwidth of the first component carrier. Optionally, the downlink BWP bandwidth of the first component carrier is less than or equal to the maximum downlink BWP bandwidth supported by the first component carrier. Optionally, the uplink BWP bandwidth of the first component carrier is less than or equal to the maximum uplink BWP bandwidth supported by the first component carrier. In other words, a downlink transmission capability configured by the network device for the terminal device on the first component carrier does not exceed a downlink transmission capability supported by the terminal device on the first component carrier, or an uplink transmission capability configured by the network device for the terminal device on the first component carrier does not exceed an uplink transmission capability supported by the terminal device on the first component carrier.

FIG. 12 is used as an example. The downlink BWP bandwidth, of the first component carrier, configured by the network device for the terminal device may be a bandwidth that does not exceed 40 M, for example, a bandwidth of 40 M, 30 M, or 20 M.

In a possible implementation, the network device may indicate, by using RRC reconfiguration signaling, the terminal device to switch between receive modes corresponding to different downlink BWP bandwidths or switch between transmit modes corresponding to different uplink BWP bandwidths.

Step 1104: After receiving the configuration information, the terminal device receives a downlink signal on a downlink BWP of the first component carrier or sends an uplink signal on an uplink BWP of the first component carrier based on the configuration information.

In the procedure shown in FIG. 11, the terminal device may report different downlink BWP bandwidths and different uplink BWP bandwidths that are supported by the terminal device, to implement decoupling between a maximum uplink BWP bandwidth and a maximum downlink BWP bandwidth. The network device may configure a BWP for the terminal device based on a BWP bandwidth capability reported by the terminal device. Specifically, when configuring a large carrier bandwidth, the network device may restrict the terminal device to schedule the terminal device on a small downlink BWP bandwidth for downlink transmission, or restrict the terminal device to schedule the terminal device on a small uplink BWP bandwidth for uplink transmission. Compared with a related technology in which the network device configures a same carrier bandwidth for the terminal device for uplink and downlink transmission, according to the method in this embodiment of this application, more flexible uplink and downlink transmission scheduling can be implemented. For example, the downlink BWP bandwidth supported by the terminal device can be less than the uplink BWP bandwidth. When an uplink high rate requirement is met, a downlink capability of the terminal device can be reduced, thereby reducing implementation costs of the terminal device.

For example, in the capability information reported by the terminal device, a cell bandwidth corresponding to the first component carrier is equal to 100 M, and correspondingly, both the maximum downlink channel bandwidth and the maximum uplink channel bandwidth of the first component carrier are 100 M. In the capability information, if the maximum downlink BWP bandwidth of the first component carrier is equal to 40 M, it indicates that the terminal device supports only a downlink BWP capability that does not exceed 40 M on the first carrier. In the capability information, if the maximum uplink BWP bandwidth of the first component carrier is equal to 60 M, it indicates that the terminal device supports only an uplink BWP capability that does not exceed 60 M on the first carrier.

It may be understood that, to implement the functions in the foregoing embodiments, the network device and the terminal device include corresponding hardware structures and/or software modules for performing the functions. A person skilled in the art should easily be aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

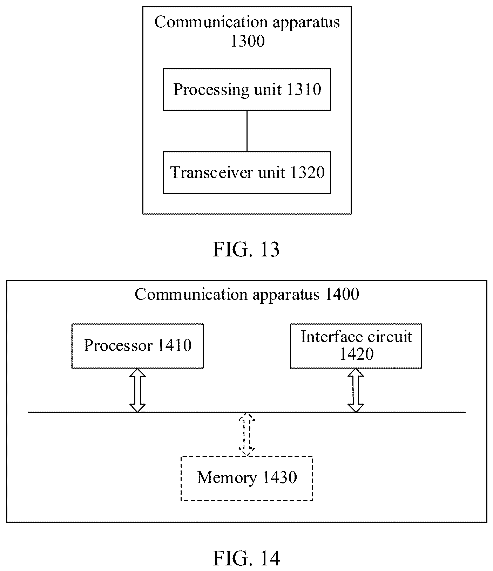

FIG. 13 and FIG. 14 are diagrams of structures of possible communication apparatuses according to embodiments of this application. These communication apparatuses may be configured to implement functions of the terminal device or the network device in the foregoing method embodiments. Therefore, beneficial effect of the foregoing method embodiments can also be implemented. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 13, the communication apparatus 1300 includes a processing unit 1310 and a transceiver unit 1320. The communication apparatus 1300 is configured to implement functions of the terminal device or the network device in the method embodiment shown in FIG. 5, FIG. 8, FIG. 9, or FIG. 11.

When the communication apparatus 1300 is configured to implement functions of the terminal device in the method embodiment shown in FIG. 5, the transceiver unit 1320 is configured to receive first information sent by a network device, where the first information is used to query for capability information of the terminal device; and the processing unit 1310 is configured to send the capability information of the terminal device to the network device based on the first information, where the capability information of the terminal device indicates a supported first band combination, the first band combination includes M bands, the capability information of the terminal device includes second information, the second information indicates N downlink band groups in the first band combination, each of the N downlink band groups includes at least one of the M bands, and both M and N are positive integers.

When the communication apparatus 1300 is configured to implement functions of the network device in the method embodiment shown in FIG. 5, the processing unit 1310 is configured to: send first information to a terminal device through the transceiver unit 1320, where the first information is used to query for capability information of the terminal device; and receive the capability information of the terminal device that is sent by the terminal device, where the capability information of the terminal device indicates a supported first band combination, the first band combination includes M bands, the capability information of the terminal device includes second information, the second information indicates N downlink band groups in the first band combination, each of the N downlink band groups includes at least one of the M bands, and both M and N are positive integers.

When the communication apparatus 1300 is configured to implement functions of the terminal device in the method embodiment shown in FIG. 9, the transceiver unit 1320 is configured to receive first information sent by a network device, where the first information is used to query for capability information of the terminal device; and the processing unit 1310 is configured to send the capability information of the terminal device to the network device based on the first information, where the capability information of the terminal device indicates a feature set of a first band in a first band combination, and the feature set of the first band includes an uplink feature set but does not include a downlink feature set.

When the communication apparatus 1300 is configured to implement functions of the network device in the method embodiment shown in FIG. 9, the processing unit 1310 is configured to: send first information to a terminal device through the transceiver unit 1320, where the first information is used to query for capability information of the terminal device; and receive the capability information of the terminal device that is sent by the terminal device, where the capability information of the terminal device indicates a feature set of a first band in a first band combination, and the feature set of the first band includes an uplink feature set but does not include a downlink feature set.

When the communication apparatus 1300 is configured to implement functions of the terminal device in the method embodiment shown in FIG. 11, the transceiver unit 1320 is configured to receive first information sent by a network device, where the first information is used to query for capability information of the terminal device; and the processing unit 1310 is configured to send the capability information of the terminal device to the network device based on the first information, where the capability information of the terminal device indicates a maximum downlink bandwidth part BWP bandwidth and/or a maximum uplink BWP bandwidth that are/is supported by a first component carrier, and the maximum downlink BWP bandwidth supported by the first component carrier is less than or equal to a maximum downlink channel bandwidth of the first component carrier.

When the communication apparatus 1300 is configured to implement functions of the network device in the method embodiment shown in FIG. 11, the processing unit 1310 is configured to: send first information to a terminal device through the transceiver unit 1320, where the first information is used to query for capability information of the terminal device; and receive the capability information of the terminal device that is sent by the terminal device, where the capability information of the terminal device indicates a maximum downlink bandwidth part BWP bandwidth supported by a first component carrier, and the maximum downlink BWP bandwidth supported by the first component carrier is less than or equal to a maximum downlink channel bandwidth of the first component carrier.

For more detailed descriptions of the processing unit 1310 and the transceiver unit 1320, directly refer to related descriptions in the method embodiment shown in FIG. 5, FIG. 8, FIG. 9, or FIG. 11. Details are not described herein again.

As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to: store instructions executed by the processor 1410, or store input data required for running instructions by the processor 1410, or store data generated after the processor 1410 runs instructions.

When the communication apparatus 1400 is configured to implement the method shown in FIG. 5, FIG. 8, FIG. 9, or FIG. 11, the processor 1410 is configured to implement a function of the processing unit 1310, and the interface circuit 1420 is configured to implement a function of the transceiver unit 1320.

When the communication apparatus is a chip used in a terminal device, the chip in the terminal implements functions of the terminal device in the foregoing method embodiments. The chip in the terminal receives information from another module (for example, a radio frequency module or an antenna) in the terminal device, where the information is sent by a network device to the terminal; or the chip in the terminal sends information to another module (for example, a radio frequency module or an antenna) in the terminal device, where the information is sent by the terminal device to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

In this application, another example of the apparatus is provided. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 14, the communication apparatus 1400 includes one processor 1410 and one memory 1430. The processor 1410 is coupled to the memory 1430. The memory 1430 stores instructions. When the instructions stored in the memory 1430 are executed by the processor 1410, the communication apparatus 1400 performs the method performed by the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. The storage medium may alternatively be a component of the processor. The processor and the storage medium may be located in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are completely or partially performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile storage medium or a non-volatile storage medium, or may include both a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. In text descriptions of this application, the character "/" usually represents an "or" relationship between associated objects. In a formula in this application, the character "/" represents a "division" relationship between associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, applied to a terminal device, wherein the method comprises:
receiving first information sent by a network device, wherein the first information is used to query for capability information of the terminal device; and
sending the capability information of the terminal device to the network device based on the first information, wherein the capability information indicates a first band combination supported by the terminal device, the first band combination comprises M bands, the capability information comprises second information, the second information indicates N downlink band groups in the first band combination, each of the N downlink band groups comprises at least one of the M bands, and both M and N are positive integers.

2. The method according to claim 1, wherein the first band combination comprises a band that is supported by the terminal device and that is configured for carrier aggregation or dual connectivity and a carrier comprised in the band; and
each of the N downlink band groups comprises a band in which the terminal device can simultaneously receive downlink signals.

3. The method according to claim 1 or 2, wherein the N downlink band groups comprise a first downlink band group, and the first downlink band group comprises a first band; and
the capability information comprises third information, the third information indicates a first quantity of carriers supported by the first band for receiving downlink signals, and the first quantity is a maximum quantity of carriers on which the terminal device can simultaneously receive downlink signals in the first band.

4. The method according to any one of claims 1 to 3, wherein the capability information further indicates a first uplink transmission capability corresponding to the first band combination or a second uplink transmission capability corresponding to the first band combination, the first uplink transmission capability indicates that the terminal device sends an uplink signal in different bands of the first band combination through uplink transmit channel switching, and the second uplink transmission capability indicates that the terminal device simultaneously sends uplink signals in a band of the first band combination.

5. The method according to any one of claims 1 to 4, wherein the method further comprises:
receiving scheduling information sent by the network device, wherein the scheduling information indicates the terminal device to receive downlink signals on K carriers, the K carriers are carriers comprised in the first downlink band group, the first downlink band group is one of the N downlink band groups, and K is a positive integer; and
receiving the downlink signals on the K carriers based on the scheduling information.

6. A communication method, applied to a network device, wherein the method comprises:
sending first information to a terminal device, wherein the first information is used to query for capability information of the terminal device; and
receiving the capability information of the terminal device that is sent by the terminal device, wherein the capability information indicates a first band combination supported by the terminal device, the first band combination comprises M bands, the capability information comprises second information, the second information indicates N downlink band groups in the first band combination, each of the N downlink band groups comprises at least one of the M bands, and both M and N are positive integers.

7. The method according to claim 6, wherein the first band combination comprises a band that is supported by the terminal device and that is configured for carrier aggregation or dual connectivity and a carrier comprised in the band; and
each of the N downlink band groups comprises a band in which the terminal device can simultaneously receive downlink signals.

8. The method according to claim 6 or 7, wherein the N downlink band groups comprise a first downlink band group, and the first downlink band group comprises a first band; and
the capability information comprises third information, the third information indicates a first quantity of carriers supported by the first band for receiving downlink signals, and the first quantity is a maximum quantity of carriers on which the terminal device can simultaneously receive downlink signals in the first band.

9. The method according to claim 8, wherein the method further comprises:
sending first scheduling information to the terminal device, wherein the first scheduling information indicates the terminal device to receive downlink signals on K carriers, the K carriers are carriers comprised in the first downlink band group, the K carriers comprise K1 carriers that are in the first band and that are for receiving downlink signals, K1 is less than or equal to the first quantity indicated by the third information, both K and K1 are positive integers, and K1 is less than K; and
sending the downlink signals to the terminal device on the K carriers.

10. The method according to claim 6 or 7, wherein the method further comprises:
sending first scheduling information to the terminal device, wherein the first scheduling information indicates the terminal device to receive downlink signals on K carriers, the K carriers are carriers comprised in a first downlink band group, the first downlink band group is one of the N downlink band groups, and K is a positive integer; and
sending the downlink signals to the terminal device on the K carriers.

11. The method according to any one of claims 6 to 10, wherein the capability information further indicates a first uplink transmission capability corresponding to the first band combination or a second uplink transmission capability corresponding to the first band combination, the uplink transmission capability comprises one of the first uplink transmission capability and the second uplink transmission capability, the first uplink transmission capability indicates that the terminal device sends an uplink signal in different bands of the first band combination through uplink transmit channel switching, and the second uplink transmission capability indicates that the terminal device simultaneously sends uplink signals in a band of the first band combination.

12. The method according to claim 11, wherein the uplink transmission capability corresponding to the first band combination is the second uplink transmission capability; and
the method further comprises:
determining P carriers based on a carrier that is comprised in the first band combination and that is for sending an uplink signal, wherein P is a positive integer;
sending second scheduling information to the terminal device, wherein the second scheduling indicates the terminal device to send uplink signals on the P carriers by using a maximum multiple-input multiple-output MIMO capability of the P carriers; and
receiving, on the P carriers, the uplink signals sent by the terminal device.

13. A communication method, applied to a terminal device, wherein the method comprises:
receiving first information sent by a network device, wherein the first information is used to query for capability information of the terminal device; and
sending the capability information of the terminal device to the network device based on the first information, wherein the capability information indicates a maximum downlink bandwidth part BWP bandwidth and/or a maximum uplink BWP bandwidth that are/is supported by a first component carrier, and the maximum downlink BWP bandwidth supported by the first component carrier is less than or equal to a maximum downlink channel bandwidth of the first component carrier.

14. The method according to claim 13, wherein the first component carrier is a component carrier in a first band in a first band combination.

15. The method according to claim 13 or 14, wherein the maximum uplink BWP bandwidth supported by the first component carrier is equal to the maximum downlink channel bandwidth of the first component carrier.

16. The method according to claim 13 or 14, wherein the maximum uplink BWP bandwidth supported by the first component carrier is less than or equal to a maximum uplink channel bandwidth of the first component carrier.

17. The method according to any one of claims 13 to 16, wherein the method further comprises:
receiving configuration information sent by the network device, wherein the configuration information indicates a downlink BWP bandwidth of the first component carrier, and the downlink BWP bandwidth of the first component carrier is less than or equal to the maximum downlink BWP bandwidth supported by the first component carrier; and
receiving a downlink signal on a downlink BWP of the first component carrier.

18. The method according to any one of claims 13 to 16, wherein the method further comprises:
receiving configuration information sent by the network device, wherein the configuration information indicates an uplink BWP bandwidth of the first component carrier, and the uplink BWP bandwidth of the first component carrier is less than or equal to the maximum uplink BWP bandwidth supported by the first component carrier; and
sending an uplink signal on an uplink BWP of the first component carrier.

19. A communication method, applied to a network device, wherein the method comprises:
sending first information to a terminal device, wherein the first information is used to query for capability information of the terminal device; and
receiving the capability information of the terminal device that is sent by the terminal device, wherein the capability information indicates a maximum downlink bandwidth part BWP bandwidth and/or a maximum uplink BWP bandwidth that are/is supported by a first component carrier, and the maximum downlink BWP bandwidth supported by the first component carrier is less than or equal to a maximum downlink channel bandwidth of the first component carrier.

20. The method according to claim 19, wherein the first component carrier is a component carrier in a first band in a first band combination.

21. The method according to claim 19 or 20, wherein the maximum uplink BWP bandwidth supported by the first component carrier is equal to the maximum downlink channel bandwidth of the first component carrier.

22. The method according to claim 19 or 20, wherein the maximum uplink BWP bandwidth supported by the first component carrier is less than or equal to a maximum uplink channel bandwidth of the first component carrier.

23. The method according to any one of claims 19 to 22, wherein the method further comprises:
determining a first downlink BWP bandwidth of the first component carrier based on the maximum downlink BWP bandwidth supported by the first component carrier, wherein the first downlink BWP bandwidth is less than or equal to the maximum downlink BWP bandwidth of the first component carrier;
sending configuration information to the terminal device, wherein the configuration information indicates the first downlink BWP bandwidth; and
sending a downlink signal to the terminal device on the first downlink BWP.

24. The method according to any one of claims 19 to 22, wherein the method further comprises:
determining a first uplink BWP bandwidth of the first component carrier based on the maximum uplink BWP bandwidth supported by the first component carrier, wherein the first uplink BWP bandwidth is less than or equal to the maximum uplink BWP bandwidth of the first component carrier;
sending configuration information to the terminal device, wherein the configuration information indicates the first uplink BWP bandwidth; and
receiving, on the first uplink BWP, an uplink signal sent by the terminal device.

25. A communication apparatus, comprising a unit or module configured to perform the method according to any one of claims 1 to 5, a unit or module configured to perform the method according to any one of claims 6 to 12, a unit or module configured to perform the method according to any one of claims 13 to 18, or a unit or module configured to perform the method according to any one of claims 19 to 24.

26. A communication apparatus, comprising one or more processors and one or more memories, wherein the one or more memories store one or more programs; and when the program is executed by the one or more processors, the apparatus is enabled to perform the method according to any one of claims 1 to 5, the method according to any one of claims 6 to 12, the method according to any one of claims 13 to 18, or the method according to any one of claims 19 to 24.

27. A chip system, wherein the chip system comprises at least one chip and a memory, and the at least one chip is configured to read and execute a program stored in the memory, to implement the method according to any one of claims 1 to 5, the method according to any one of claims 6 to 12, the method according to any one of claims 13 to 18, or the method according to any one of claims 19 to 24.

28. A readable storage medium, wherein the readable storage medium comprises a program; and when the program is run on an apparatus, the apparatus is enabled to perform the method according to any one of claims 1 to 5, the method according to any one of claims 6 to 12, the method according to any one of claims 13 to 18, or the method according to any one of claims 19 to 24.

29. A program product, wherein when the program product runs on an apparatus, the apparatus is enabled to perform the method according to any one of claims 1 to 5, the method according to any one of claims 6 to 12, the method according to any one of claims 13 to 18, or the method according to any one of claims 19 to 24.
